# EUROPÄISCHE PATENTSCHRIFT

(11) **EP 3 767 565 B1**
(45) Veröffentlichungstag und Bekanntmachung des Hinweises auf die Patenterteilung: **13.09.2023**
(21) Anmeldenummer: 19186582.3
(22) Anmeldetag: 16.07.2019
(51) Int. Cl.: G06Q 10/08

(54) **VERFAHREN ZUM LIEFERN EINES BESTELLOBJEKTS AN EIN ZUMINDEST TEILAUTONOM FAHRENDES KRAFTFAHRZEUG**
METHOD FOR SUPPLYING AN ORDERED OBJECT TO AN AT LEAST PARTIALLY AUTONOMOUS MOTOR VEHICLE
PROCÉDÉ DE LIVRAISON D'UN OBJET DE COMMANDE À UN VÉHICULE AUTOMOBILE AU MOINS PARTIELLEMENT AUTONOME

(43) Veröffentlichungstag der Anmeldung: 20.01.2021
(73) Patentinhaber: Volkswagen Aktiengesellschaft, 38440 Wolfsburg (DE)
(72) Erfinder: Bader, Viktor, 38448 Wolfsburg (DE)

(56) Entgegenhaltungen:
- US-A1- 2018 012 224

## Beschreibung

Die Erfindung betrifft ein Verfahren zum Liefern eines Bestellobjekts an ein zumindest teilautonom fahrendes Kraftfahrzeug sowie ein Kraftfahrzeug mit einer Steuereinrichtung, die dazu ausgebildet ist, entsprechende Verfahrensteile eines derartigen Verfahrens durchzuführen.

Heutzutage tragen zahlreiche Personen ein intelligentes Gerät, ein sogenanntes Smart Device, wie zum Beispiel ein Smartphone, bei sich. Für ein solches Gerät existieren bereits verschiedene Zusatzfunktionen, wie beispielsweise Bestellapplikationen zur Bestellung von Gütern und/oder Dienstleistungen oder Navigationsfunktionen. Befindet sich die Person nun beispielsweise zu einem aktuellen Zeitpunkt in einem Kraftfahrzeug, kann es für wie zu einer Komforterhöhung beitragen, wenn ein Bestellvorgang bei einem Dienstleister, beispielsweise einem Lieferservice für Essen, von dem Kraftfahrzeug aus erfolgt.

Die US 2017/0089720 A1 zeigt ein Verfahren für ein Kraftfahrzeug, bei dem zunächst eine Navigationsinformation ausgewertet und bestimmt wird, welche Dienstleistungsangebote entlang eines Fahrwegs des Kraftfahrzeugs zur Verfügung stehen. Hierbei wird es einem Insasse vom Kraftfahrzeug aus ermöglicht, beispielsweise eine Reservierung in einem Restaurant auf dem Fahrweg abzugeben und/oder einen Dienstleister direkt zu kontaktieren. Die CN 107036616 A zeigt ein navigationsbasiertes Bestellsystem, bei dem ein Insasse ein gewünschtes Lieferziel angibt, zu dem er eine Bestellung, wie eines Essensbestellung, geliefert haben möchte.

Die US 2018/012224 A1 zeigt ein Fahrzeug mit einem Navigationssystem, dessen Benutzer eine Transaktion mit einer Bank durchführen möchte. Hierfür wird automatisch eine authentifizierte erste Mitteilung an die Bank gesendet. Während der Fahrt des Fahrzeugs wird zu einem späteren Zeitpunkt ein vorgegebenes Ereignis identifiziert und daraufhin eine zweite Mitteilung an die Bank gesendet, um die Transaktion mit dem Benutzer abzuschließen. Darüber hinaus zeigt die US 2018/012224 A1 ein vollautonom fahrendes Kraftfahrzeug, das zu einer dritten Partei, beispielsweise zu einem Restaurant oder einem anderen fest vorgegebenen Ort, navigieren kann, um dort bestellte Waren oder Dienstleistungen zu erhalten.

Es ist die Aufgabe der Erfindung eine Lösung bereitzustellen, mittels der ein Bestellobjekt für einen Insassen eines Kraftfahrzeugs komfortabel geliefert werden kann.

Diese Aufgabe wird durch die Gegenstände der unabhängigen Patentansprüche gelöst. Vorteilhafte Ausgestaltungen mit zweckmäßigen und nicht-trivialen Weiterbildungen der Erfindung sind in den abhängigen Ansprüchen, der folgenden Beschreibung und den Figuren angegeben.

Das erfindungsgemäße Verfahren ist dazu ausgebildet, ein Bestellobjekt an ein zumindest teilautonom fahrendes Kraftfahrzeug zu liefern. Denn für einen Insassen kann es als besonders komfortabel sein, wenn ihm das Bestellobjekt direkt ins Kraftfahrzeugs selbst geliefert wird. Bei dem Bestellobjekt handelt es sich beispielsweise um eine Essensbestellung, beispielsweise eine Pizza, ein Fastfood-Menü oder ein beliebiges anderes Gericht. Alternativ oder zusätzlich dazu kann es sich bei dem Bestellobjekt um eine Paketlieferung eines bestellten Gegenstands oder eine Briefsendung handeln, wobei Voraussetzung ist, dass die Lieferung des Bestellobjekts in das Kraftfahrzeug aufgrund einer Größe und/oder einer Masse des Bestellobjekts sinnvoll ist. Das Kraftfahrzeug fährt vollautonom, kann jedoch in einer nicht beanspruchten Alternative teilautonom mithilfe eines Fahrerassistenzsystems angesteuert werden, wobei relevant ist, dass ein Fahrziel des Kraftfahrzeugs eingegeben und folglich eine Routenführung mittels eines Fahrerassistenzsystems, beispielsweise mittels eines Navigationssystems des Kraftfahrzeugs, zu einem aktuellen Zeitpunkt aktiviert ist.

Das Verfahren zum Liefern eines Bestellobjekts an das zumindest teilautonom fahrende Kraftfahrzeug umfasst folgende Schritte: Zunächst erfolgt ein Überprüfen, ob im Kraftfahrzeug eine Bestellfunktion aktiviert wurde. Hierfür kann beispielsweise auf einem berührungssensitiven Bildschirm im Kraftfahrzeug ein entsprechendes auswählbares Symbol angezeigt werden, nach dessen Betätigung die Bestellfunktion als aktiviert gilt. Die Bestellfunktion kann jedoch alternativ oder zusätzlich dazu mittels einer entsprechenden Applikation eines mobilen Endgeräts, wie eines Smartphones des Insassen des Kraftfahrzeugs, aktiviert werden, beispielsweise wenn dieses mobile Endgerät mit dem Kraftfahrzeug zum Beispiel über eine Bluetooth-Verbindung gekoppelt ist. Die Bestellfunktion kann beispielsweise dann von dem Insasse des Kraftfahrzeugs aktiviert werden, wenn dieser Hunger verspürt. Die aktivierte Bestellfunktion kann also signalisieren, dass der an einer Essenslieferung in das zumindest teilautonom fahrende Kraftfahrzeug interessiert ist.

Alternativ oder zusätzlich dazu kann mit dem Aktivieren der Bestellfunktion der Wunsch nach einer Lieferung eines beliebigen anderen der Bestellobjekte ausgedrückt werden.

In einem weiteren Verfahrensschritt wird eine aktuelle Position sowie ein Fahrziel des Kraftfahrzeugs festgestellt. Daraufhin erfolgt ein Ermitteln zumindest einer Fahrroute von der festgestellten aktuellen Position des Kraftfahrzeugs zum festgestellten Fahrziel unter Anwendung eines Fahrroutenoptimierungskriteriums. Dieses Kriterium enthält Vorgaben hinsichtlich einer Routenplanung für das Kraftfahrzeug und kann beispielsweise mittels Eingaben des Insassen des Kraftfahrzeugs eingestellt worden sein. Hierbei kann beispielsweise festgelegt werden, welche Straßenart bevorzugt im Rahmen der Fahrroute befahren werden soll. Alternativ oder zusätzlich dazu kann beim Ermitteln der Fahrroute mithilfe des Fahrroutenoptimierungskriteriums ein aktueller Verkehrsfluss auf einem Weg von der aktuellen Position zum Fahrziel berücksichtigt werden. Typischerweise wird hierbei mehr als eine Fahrroute ermittelt, wobei sich die einzelnen Fahrrouten beispielsweise hinsichtlich einer Gesamtfahrstrecke, einer Gesamtfahrlänge und/oder einem Gesamtenergieverbrauch des Kraftfahrzeugs für die entsprechende Fahrroute unterscheiden. Es werden also zunächst verschiedene, unter Berücksichtigung des Fahrroutenoptimierungskriteriums für sinnvoll erachtete Fahrmöglichkeiten festgestellt, die jeweils von der aktuellen Position zum Fahrziel führen. Bei der aktuellen Position handelt es sich beispielsweise um eine beliebige Stelle auf einer Schnellstraße, wohingegen das Fahrziel des Kraftfahrzeugs zum Beispiel ein Wohnhaus des Insassen des Kraftfahrzeugs ist.

Falls die Bestellfunktion aktiviert wurde, werden in einem weiteren Verfahrensschritt Anbieterinformationsdaten von potentiellen Anbietern ermittelt. Bei diesen Anbietern handelt es sich um jeweilige Anbieter, die eine Lieferung eines Bestellobjekts mittels eines mobilen Übergabesystems in einer vorgegebenen Umgebung der zumindest einen ermittelten Fahrroute anbieten. Hat der Insasse beispielsweise mithilfe der aktivierten Bestellfunktion angegeben, dass er eine Essensbestellung wünscht, werden ihm verschiedene potentielle Lieferservices von Restaurants angegeben, die bereit sind, in einer jeweiligen vorgegebenen Umgebung einer der jeweiligen ermittelten Fahrrouten des Kraftfahrzeugs Essen auszuliefern. Das jeweilige Übergabesystem ist ein vollautonom fahrendes Kraftfahrzeug des Lieferservices oder eine autonom fahrende Lieferdrohne. Die Anbieterinformationsdaten selbst enthalten beispielsweise einen Namen des potentiellen Anbieters, Informationen zu dessen Menüauswahl, das heißt dessen Getränke- und/oder Essenangebot, Kundenbewertungen von Personen, die bisher bei diesem Anbieter bestellt haben, Informationen zu Zusatzstoffen in den angebotenen Lebensmitteln und/oder zusätzliche Informationen zum Restaurant als potentiellen Anbieter von geliefertem Essen an sich. Derartige Anbieterinformationsdaten werden jedoch nur von den Anbietern ermittelt, die innerhalb einer maximalen Entfernung der jeweiligen ermittelten Fahrrouten eine Lieferung des Bestellobjekts anbieten, sodass keine potentiellen Anbieter ermittelt werden, deren Lieferung entlang des Fahrwegs von der aktuellen Position zum Fahrtziel nicht angeboten und folglich nicht realisierbar ist. Die entsprechende maximale Entfernung, das heißt die vorgegebene Umgebung, kann zum Beispiel vom potentiellen Anbieter selbst festgelegt werden oder für alle potentiellen Anbieter fest vorgegebene sein, indem ein allgemeiner Standardwert für die maximale Entfernung angenommen wird.

Für jeden der potentiellen Anbieter, von dem jeweilige Anbieterinformationsdaten ermittelt wurden, werden nun Koordinaten und ein Zeitpunkt eines Treffens des Kraftfahrzeugs mit dem mobilen Übergabesystem zum Liefern des Bestellobjekts vom mobilen Übergabesystem an das Kraftfahrzeug ermittelt. Dieses Ermitteln erfolgt unter Anwendung eines eine aktuellen Verkehrslage beschreibenden Verkehrslagekriteriums und eines Planungskriteriums. Das Planungskriterium umfasst beispielsweise Koordinaten des jeweiligen potentiellen Anbieters, das heißt einen Ort einer Herstellung und/oder einer Lagerung des Bestellobjekts. Außerdem werden beispielsweise mithilfe des Planungskriteriums Vorbereitungszeiten des Bestellobjekts, eine Auslastung des mobilen Übergabesystems sowie weitere die Planung der Auslieferung des Bestellobjekts betreffende Daten bereitgestellt. Das Verkehrslagekriterium enthält beispielsweise Informationen zu einem Verkehrsfluss zwischen der aktuellen Position des Kraftfahrzeugs und einem potentiellen Treffpunkt mit dem mobilen Übergabesystem sowie zwischen dem Ort der Herstellung und/oder der Lagerung des Bestellobjekts und dem potentiellen Treffpunkt. Hierbei können zudem oder alternativ beispielsweise Informationen zu einem Stau, einem Baustellenbereich oder einer Geschwindigkeitsbegrenzung auf einer Route von dem jeweiligen Startort zum potentiellen Treffpunkt berücksichtigt werden. Mithilfe des Verkehrslagekriteriums und des Planungskriteriums kann somit ein Treffpunkt hinsichtlich Ort und Zeit ermittelt werden, an dem das Bestellobjekt von dem mobilen Übergabesystem, das heißt beispielsweise von dem Fahrradkurier mit dem Fahrrad, an das Kraftfahrzeug und somit an den Insassen des Kraftfahrzeugs geliefert und diesem übergeben werden kann. Als Ort werden die Koordinaten des Treffens und als Zeit der Zeitpunkt des Treffens ermittelt. Bei den ermittelten Koordinaten des Treffpunkts handelt es sich beispielsweise um die Koordinaten eines Rastplatzes, eines Parkplatzes, einer Haltebucht oder eines anderen Ortes, an dem die Lieferung des Bestellobjekts in etwa ohne Behinderung von anderen Verkehrsteilnehmern möglich ist. Der Zeitpunkt wird abhängig von den Lieferzeiten des potentiellen Anbieters für das gewünschte Bestellobjekt sowie abhängig von einer Distanz des Treffpunkts von der aktuellen Position des Kraftfahrzeugs sowie dem Herstellungsort und/oder Lagerort des potentiellen Anbieters ermittelt.

Daraufhin werden die ermittelten Anbieterinformationsdaten sowie die ermittelten Koordinaten und der ermittelte Zeitpunkt des Treffens auf einer Anzeigeeinrichtung im Kraftfahrzeug angezeigt. Hierbei kann beispielsweise mithilfe der Anbieterinformationsdaten zusätzlich differenziert werden, welches Bestellobjekt des potentiellen Anbieters zu welchem Zeitpunkt an den ermittelten Ort des Treffens geliefert werden kann. Außerdem wird eine aktivierbare Bestelloption zum Bestellen des Bestellobjekts bei dem potentiellen Anbieter bereitgestellt. Beispielsweise wird zusätzlich zu der Anzeige der Information betreffend die Bestellung der Lieferung des Bestellobjekts auf dem berührungsempfindlichen Bildschirm im Kraftfahrzeug oder auf dem mit dem Kraftfahrzeug gekoppelten mobilen Endgerät eine Betätigungsfunktion bereitgestellt, bei deren Betätigung das Bestellobjekt bestellt und folglich die Lieferung des Bestellobjekts zu den ermittelten Koordinaten sowie zum ermittelten Zeitpunkt des Treffens vereinbart wird.

Falls nun die Bestelloption für eine Bestellung bei einem der potentiellen Anbieter aktiviert wurde, das heißt tatsächlich ein Lieferservice und das von diesem gewünschte Gericht ausgewählt wurde, erfolgt das zumindest teilautonome Ansteuern des Kraftfahrzeugs zum ermittelten Treffen mit dem mobilen Übergabesystem. Das Kraftfahrzeug wird also zum ermittelten und auch gegebenenfalls mittels der Bestätigungsfunktion bestätigten Treffen mit dem mobilen Übergabesystem geleitet, sodass es zu den ermittelten Koordinaten fährt und dort voraussichtlich zum ermittelten Zeitpunkt des Treffens ankommt. Am Ort des ermittelten Treffens zum ermittelten Zeitpunkt kann dann die Übergabe des Bestellobjekts stattfinden, deren Koordinaten und Zeitpunkt zuvor dynamisch unter Berücksichtigung des Verkehrslagekriteriums und des Planungskriteriums ermittelt wurden. Entscheidet sich der Insasse des Kraftfahrzeugs beispielsweise für die Bestellung einer Pizza bei einer Pizzeria, die die Lieferung der Pizza als Bestellobjekt in der vorgegebenen Umgebung der ermittelten Fahrroute anbietet, wird das Kraftfahrzeug des Insassen mithilfe des Verfahrens zu dem ermittelten Treffen geleitet, sodass der Insasse des Kraftfahrzeugs dort die von ihm bestellte Pizza von dem mobilen Übergabesystem, das heißt beispielsweise von einem Pizzaauslieferkurier, entgegennehmen kann. Hierdurch wird ohne eine Vorgabe von Seiten des Insassen oder des Lieferservices her, das für beide beteiligte Parteien optimale Treffen zur Lieferung des Bestellobjekts an das Kraftfahrzeug automatisch ermittelt. Je nach Verkehrslage sowie je nach aktuellem Planungszustand des Anbieters, das heißt zum Beispiel je nach Auslastung der Pizzeria, kann hierdurch das für beide Parteien vorteilhafte Treffen ermittelt und vereinbart werden. Hierbei ist weder ein besonderer Umweg, das heißt ein Abweichen von der Fahrroute, aufgrund eines Fahrens des Kraftfahrzeugs zur Pizzeria selbst nötig, noch muss sich der Insasse des Kraftfahrzeugs aufwändig mit der Planung der Beschaffung des Bestellobjekts beschäftigen, da er im Grunde automatisch mit seinem zumindest teilautonom fahrenden Kraftfahrzeug zum ermittelten Treffen geleitet wird.

Die einzelnen beschriebenen Schritte werden mit einer Steuereinrichtung des Kraftfahrzeugs durchgeführt, die in einem Informationsaustausch mit einer externen Servereinrichtung steht, und zwar beispielsweise einer zur Koordinierung von Bestellungen bei den potentiellen Anbietern ausgestalteten externen Einrichtung. Die Kommunikation zwischen der Steuereinrichtung des Kraftfahrzeugs und dieser externen Einrichtung erfolgt beispielsweise über jeweilige drahtlose Kommunikationsverbindungen, wie beispielsweise eine Car-to-X-Kommunikation oder über ein mobiles Datennetz.

Zu der Erfindung gehören auch Ausgestaltungsformen, durch die sich zusätzliche Vorteile ergeben.

In einer vorteilhaften Ausgestaltungsform werden, falls die Bestelloption aktiviert wurde, Bestelldaten, die die Bestellung der Lieferung des Bestellobjekts beschreiben, sowie die ermittelten Koordinaten und der ermittelte Zeitpunkt des Treffens des Kraftfahrzeugs mit dem mobilen Übergabesystem an eine externe Einrichtung übermittelt. Die externe Einrichtung ermittelt daraufhin unter Anwendung eines Lieferplanungskriteriums eine Lieferroute und eine Lieferzeit für das mobile Übergabesystem zum ermittelten Treffen. Die ermittelte Lieferroute und die ermittelte Lieferzeit werden daraufhin an das mobile Übergabesystem übermittelt. Es findet also nicht nur eine Bestimmung der Fahrroute des Kraftfahrzeugs von der aktuellen Position zu den Koordinaten des ermittelten Treffens statt, sondern auch eine entsprechende Routenplanung auf Seiten des potentiellen Anbieters. Zur Planung der Lieferroute des Übergabesystems wird bevorzugt die externe Einrichtung hinzugezogen. Die externe Einrichtung kann beispielsweise als Servereinrichtung ausgestaltet sein, kann jedoch alternativ oder zusätzlich dazu beispielsweise als mobiles Endgerät, wie ein Smartphone des Fahrradkuriers, eine Recheneinrichtung des potentiellen Anbieters oder eine Servereinrichtung eines Bestellservicedienstleistungsanbieters sein.

Zur der Bestimmung der Lieferroute sowie der Lieferzeit kann ebenfalls das die aktuelle Verkehrslage beschreibende Verkehrslagekriterium hinzugezogen werden. Hierbei kann beispielsweise im Rahmen der Lieferroute im Rahmen des Lieferplanungskriteriums zusätzlich berücksichtigt werden, dass von dem mobilen Übergabesystem verschiedenen Kunden beliefert werden, das heißt zunächst zum Beispiel verschiedene Koordinaten zu jeweiligen Essensübergaben im Falle eines Essenslieferservices, angefahren werden. Außerdem kann die genaue Zeit des Losfahrens des mobilen Übergabesystems mit dem geladenen Bestellobjekt je nach ermittelter Lieferroute oder Lieferzeit dynamisch angepasst und für den potentiellen Anbieter kostengünstig und ablaufoptimiert vorgegeben werden. Hierdurch wird letztendlich sichergestellt, dass das bestellte Bestellobjekt tatsächlich beim ermittelten Treffen mit dem mobilen Übergabesystem an das Kraftfahrzeug geliefert und dort übergeben werden kann.

Eine besonders vorteilhaften Ausgestaltungsform der Erfindung sieht vor, dass, falls Anbieterinformationsdaten von mehreren potentiellen Anbieter ermittelt wurden, unter Anwendung eines Bestellverhaltenskriteriums auf die ermittelten Anbieterinformationsdaten eine jeweilige Bestellwahrscheinlichkeit ermittelt wird. Diese Bestellwahrscheinlichkeit beziffert eine Wahrscheinlichkeit, mit der ein Insasse des Kraftfahrzeugs bei dem jeweiligen ermittelten potentiellen Anbieter das Bestellobjekt bestellt. Die ermittelte Bestellwahrscheinlichkeit wird daraufhin zum Bereitstellen der jeweiligen aktivierbaren Bestelloption für das Bestellobjekt ausgewertet.

Mithilfe des Bestellverhaltenskriteriums kann eine Personifizierung des Anbietens der Bestelloption realisiert werden, da beispielsweise Informationen zu einem typischen Bestellverhalten des Insassen berücksichtigt werden können. Ist beispielsweise bekannt, dass der Insasse im Falle einer gewünschten Essensbestellung als Bestellfunktion bevorzugt ein italienisches Gericht isst und in diesem Zusammenhang bevorzugt eine Pizza Margherita bestellt, kann dieses typische Bestellverhalten mithilfe des Bestellverhaltenskriteriums hinterlegt sein. Daher wird eine Bestellwahrscheinlichkeit für das Bestellen einer Pizza Margherita als hoch, jedoch die Bestellwahrscheinlichkeit für eine Bestellung eines Pasta-Gerichts verglichen damit niedriger eingeschätzt wird. Essensbestellungen von Essen anderer Richtungen, wie beispielsweise eines Fastfood-Menüs, werden darüber hinaus mit einer noch niedrigeren Wahrscheinlichkeit beziffert als das Pasta-Gericht, da sie nicht einmal die Vorliebe des Insassen für ein italienisches Gericht wiederspiegeln. Auf der Anzeigeeinrichtung wird nun zum Beispiel die Bestelloption für die Pizza Margherita bei der Pizzeria oder verschiedenen Pizzerien hervorgehoben und zum Beispiel als erste einzelne Bestelloption oder als mehrere Bestelloptionen nacheinander aus einer Liste von Bestelloptionen angezeigt. Andere Bestelloptionen für andere Anbieter oder andere Gerichte werden mit absteigender Bestellwahrscheinlichkeit weiter unten in der Liste angezeigt. Hierdurch wird aus dem Kraftfahrzeug heraus eine einfache, komfortable Bestelloption für das Bestellobjekt bereitgestellt, das mit hoher Wahrscheinlichkeit von dem Insassen bestellt werden wird. Eine derartige Priorisierung von ausgewählten Bestelloptionen mithilfe des Bestellverhaltenskriteriums kann beispielsweise von dem Insassen selbst zuvor eingestellt worden sein, sodass bewusste gewählte Präferenzen im Kraftfahrzeug hinterlegt sein können. Es kann jedoch alternativ oder zusätzlich dazu vorgesehen sein, dass, je öfter zum Beispiel ein bestimmtes Bestellobjekt bestellt wird, eine umso höhere Priorisierung dieses Bestellobjekts gegebenenfalls auch bei dem bestimmten potentiellen Anbieter in der Auflistung der ermittelten Anbieterinformationsdaten im Rahmen der Bestelloption auf der Anzeige dargestellt wird.

Alternativ oder zusätzlich dazu ist es möglich, eine Historie von vergangenen Bestellungen darzustellen, beispielsweise die letzten fünf Bestellungen von Bestellobjekten die aus dem Kraftfahrzeug heraus getätigt wurden. Hierdurch wird ebenfalls ein Bestellverhaltenskriterium angewendet und eine Bestellwahrscheinlichkeit ermittelt, da mittels einer Auflistung der letzten Bestellungen gegebenenfalls auf eine entsprechend erhöhte Bestellwahrscheinlichkeit im Vergleich zur Bestellwahrscheinlichkeit von anderen Bestellobjekten geschlossen werden kann.

Gemäß einer weiteren Ausgestaltungsform ist es vorgesehen, dass das Bestellverhaltenskriterium zumindest eine von folgenden Angaben umfasst: eine maximale Zeitdauer bis zur Lieferung des Bestellobjekts, einen maximalen Preis des Bestellobjekts, eine maximale Zeitverzögerung einer Ankunft am Fahrziel durch Ansteuern der ermittelten Koordinaten des Treffens, eine minimale durchschnittliche Kundenbewertung des potentiellen Anbieters und/oder hinterlegte Bestellverhaltensdaten des Insassen. Entsprechende Einstellungen können beispielsweise von dem Insasse zuvor angegeben worden sein, um zum Beispiel für ihn einen idealen Bestellvorgang mithilfe des beschriebenen Verfahrens zu ermöglichen. Beispielsweise kann der Insasse eine möglichst schnelle Belieferung mit dem Bestellobjekt wünschen, sodass die maximale Zeitdauer bis zum Treffen für ihn relevant ist und daher von ihm vorgegeben wird. Hierbei kann er beispielsweise vorgeben, dass er nach dem Aktivieren der Bestellfunktion stets innerhalb von 20 Minuten die Lieferung des Bestellobjekts wünscht, sodass potentielle Anbieter, die längere Lieferzeiten angeben, nicht oder nur mit niedriger Priorität als aktivierbare Bestelloption bereitgestellt werden. Zudem kann ein Preisbereich angegeben sein, in dem das gewünschte Bestellobjekt zu liegen hat. Für den Insassen kann es außerdem relevant sein, eine potentielle maximale Änderung seiner aktuellen Fahrroute einzuschränken, da er beispielsweise angibt, wie viel Zeit er zusätzlich im Kraftfahrzeug bereit ist zu verbringen, um den Ort des ermittelten Treffens als Zwischenziel anzufahren und dabei gegebenenfalls von seiner aktuellen Fahrroute abzuweichen, wodurch die Ankunft am Fahrziel verzögert wird. Der Insasse kann außerdem festlegen ob er eine Mindestpositivbewertung von anderen Personen, die bereits Kunden bei dem potentiellen Anbieter waren, beispielsweise in einem Onlinebewertungsportal für einen Lieferservice, als Voraussetzung dafür nehmen möchte, dass ihm der entsprechende potentielle Anbieter überhaupt angezeigt wird. Mithilfe der hinterlegten Bestellverhaltensdaten des Insassen kann eine Hinterlegung von Präferenzen für Essen und/oder Getränke vorgegeben sein. Hierbei können beispielsweise Lebensmittelallergien, unbeliebte Gerichte sowie Lieblingsspeisen und -getränke angegeben werden. Abhängig von den genannten einzelnen Angaben lässt sich letztendlich die Bestellwahrscheinlichkeit besonders leicht ermitteln, sodass beispielsweise eine insassenspezifische Reihenfolge einer Auflistung der möglichen Bestelloptionen ermöglicht wird. Hierdurch wird die Auswahl des Bestellobjekts sowie des Anbieters des Bestellobjekts kundenfreundlich gestaltet, sodass dieser schnell und mit geringem Aufwand das mit hoher Wahrscheinlichkeit für ihn optimale Bestellobjekt und/oder das von ihm mit hoher Wahrscheinlichkeit gewünschte Bestellobjekt identifizieren und daraufhin bestellen kann.

In einer besonders vorteilhaften Ausgestaltungsform der Erfindung ist es vorgesehen, dass eine Bestellwunschwahrscheinlichkeit eines Insassen des Kraftfahrzeugs unter Anwendung eines Bestellwunschkriteriums ermittelt wird. Falls die ermittelte Bestellwunschwahrscheinlichkeit größer als eine vorgegebene minimale Grenzwahrscheinlichkeit ist, wird die Bestellfunktion zur Aktivierung im Kraftfahrzeug bereitgestellt. Zu Beginn des beschriebenen Verfahrens, wenn überprüft wird, ob im Kraftfahrzeug die Bestellfunktion aktiviert wurde, kann dies, wie oben beschrieben, durch eine manuelle Aktivierung der Bestellfunktion durch den Insassen des Kraftfahrzeugs erfolgen. Es ist jedoch alternativ oder zusätzlich dazu möglich, dass dynamisch und automatisch vom Kraftfahrzeug selbst, beispielsweise von einer Steuereinrichtung des Kraftfahrzeugs, zunächst berechnet wird, ob die Bestellwunschwahrscheinlichkeit ausreichend groß ist, um automatisch die Bestellfunktion zur Aktivierung bereitzustellen.

Es kann beispielsweise mithilfe des Bestellwunschkriteriums im Kraftfahrzeug hinterlegt sein, dass der Insasse des Kraftfahrzeugs in der Regel zwischen 12 Uhr und 13 Uhr zu Mittag isst und zu dieser Zeit eine Lieferung eines Mittagessens in das Kraftfahrzeug wünscht, falls dieser sich zur Mittagszeit auf einer längeren Fahrroute, beispielsweise zu einem Geschäftstermin als Fahrziel, befindet. Bei einem solchen Insassen wird bereits ab beispielsweise 11:30 Uhr von einer erhöhten Bestellwunschwahrscheinlichkeit ausgegangen, sodass beispielsweise ab 11:30 Uhr die vorgegebene minimale Grenzwahrscheinlichkeit erreicht ist, sodass dem Insasse des Kraftfahrzeugs vorgeschlagen wird, und zwar mittels einer entsprechenden Anzeige auf der Anzeigeeinrichtung im Kraftfahrzeug, einen Essenslieferservice auszuwählen und dort ein Mittagessen zu bestellen, dessen Lieferung im Zeitraum zwischen 12 Uhr und 13 Uhr in das Kraftfahrzeug möglich ist. Dadurch kann beispielsweise auch ein Insasse, der beispielsweise aufgrund von Stress dazu neigt, sein Mittagessen zu vergessen, daran erinnert werden, dass sich die für ihn typische Essenszeit nähert, sodass für den Insassen ein an seine individuellen Bedürfnisse angepasster Komfort erreicht wird. Die beschriebene automatische Ermittlung der Bestellwunschwahrscheinlichkeit kann beispielsweise bei der Lieferung von Medikamenten als Bestellobjekt, die beispielsweise zu einem bestimmten Zeitpunkt benötigt werden, interessant für den Insassen des Kraftfahrzeugs sein. Ebenfalls sinnvoll könnte eine Kopplung des Bestellwunschkriteriums mit von dem Insasse hinterlegten Angaben zu aktuell oder demnächst benötigten weiteren Bestellobjekten, wie beispielsweise Lebensmitteln, Haushaltswaren oder Büchersendungen, sein. Letztendlich kann hierdurch bereits das Anbieten der Bestellfunktion insassenspezifisch automatisch bereitgestellt werden, wodurch der Komfort für den Insassen des Kraftfahrzeugs beim Bestellen der Lieferung des Bestellobjekts zusätzlich erhöht wird.

Eine weitere Ausgestaltungsform sieht vor, dass das Bestellverhaltenskriterium, die Bestellverhaltensdaten und/oder das Bestellwunschkriterium in einem mit dem Insassen des Kraftfahrzeugs verknüpften Insassenprofil hinterlegt sind. Dieses Insassenprofil wird zum Bereitstellen der Bestelloption und/oder der Bestellfunktion bereitgestellt. Ist also beispielsweise im mit dem Insassen des Kraftfahrzeugs verknüpften Insassenprofil das Bestellverhaltenskriterium hinterlegt, kann dies bei der Bestimmung der jeweiligen Bestellwahrscheinlichkeit für den jeweiligen potentiellen Anbieter und somit zum Bereitstellen der Bestelloption ausgewertet und hinzugezogen werden. Die Bestellverhaltensdaten als im Insassenprofil hinterlegte Daten eigenen sich zur Spezifizierung des Bestellverhaltenskriteriums des jeweiligen Insassen. Weist das Insassenprofil generell oder zudem das Bestellwunschkriterium auf, kann dies zum Bereitstellen der zu aktivierenden Bestellfunktion im Kraftfahrzeug ausgewertet und hinzugezogen werden.

Das Insassenprofil kann beispielsweise im Kraftfahrzeug, zum Beispiel in einer Speichereinrichtung des Kraftfahrzeugs, und/oder in der externen Einrichtung hinterlegt sein, wobei im Fall der externen Einrichtung ein entsprechender Datenaustausch zwischen dem Kraftfahrzeug und dieser externen Einrichtung zum Übermitteln der im Insassenprofil hinterlegten Informationsdaten erfolgt. Der Datenaustausch erfolgt beispielsweise über eine Car-to-X-Kommunikation oder eine andersartig ausgebildete drahtlose kommunikationsverbindung. Das Insassenprofil kann hierfür zum Beispiel vom Insassen des Kraftfahrzeugs, der aktuelle das Kraftfahrzeug benutzt, aktiviert werden. Es ist jedoch alternativ oder zusätzlich dazu möglich, das mittels einer Sensoreinrichtung des Kraftfahrzeugs eine Identifizierung des Insassen im Kraftfahrzeug stattfindet, sodass beispielsweise mittels einer Kameraeinrichtung im Kraftfahrzeuginneren sowie einer Auswerteeinrichtung des Kraftfahrzeugs, die zum Durchführen von Methoden der Objekterkennung ausgebildet ist, ein Insasse auf einem Fahrersitz eines Kraftfahrzeugs erkannt und folglich das entsprechende diesem erkannten Insassen auf dem Fahrersitz zugeordnete Insassenprofil aufgerufen und/oder geladen werden kann. Hierbei kann beispielsweise zudem ein anderer Insasse des Kraftfahrzeugs, der nicht auf dem Fahrersitz sitzt, erkannt werden. Dies ist zum Beispiel dann der Fall, wenn von der Kameraeinrichtung und der Auswerteeinrichtung des Kraftfahrzeugs erkannt wird, dass ein Beifahrer die entsprechenden Aktionen, beispielsweise die Aktivierung der Bestellfunktion auf der Anzeigeeinrichtung im Kraftfahrzeug, getätigt hat, sodass der Beifahrer als für den Bestellvorgang relevanter Insasse identifiziert wird. Wird beispielsweise erkannt, dass der Insasse des Kraftfahrzeugs, der die Bestellfunktion aktiviert oder die Bestelloption ausgewählt hat, bei seinen letzten Bestellungen jeweils eine Pizza Margherita bestellt hat, hat dies sowohl Einfluss auf die angezeigten Bestelloptionen als auch gegebenenfalls auf einen Zeitpunkt der automatischen Bereitstellung der Bestellfunktion.

Unabhängig von den ermittelten bevorzugten Bestelloptionen kann die Bestellung des Bestellobjekts jeweils individuell bearbeitet werden, sodass jederzeit beispielsweise eine Änderung einer Getränkeauswahl sowie eine Änderung des bestellten Menüs beziehungsweise des bestellten Gerichts unabhängig von den gespeicherten Bestellverhaltensweisen des Insassen, wie sie beispielsweise im Insassenprofil hinterlegt sind, möglich ist.

Durch die Verknüpfung mit dem Insassenprofil ist es möglich, dass die relevanten, die Bestellung des Bestellobjekts betreffenden personenspezifischen Daten nicht im Kraftfahrzeug selbst hinterlegt sind, sondern dass diese beispielsweise in einem in einer zentralen Servereinrichtung als externe Einrichtung hinterlegten Insassenprofil jederzeit vom Kraftfahrzeug aus zugänglich sind. Hierdurch werden eine Speicherdatenmenge im Kraftfahrzeug reduziert und zudem ein Pflegen des Insassenprofils erleichtert, da dieses nicht nur aus dem Kraftfahrzeug heraus bestellte Lieferungen von Bestellobjekten in einem historischen Verlauf speichern kann, sondern das Insassenprofil zudem mit sonstigen Bestellungen, zum Beispiel von Essenslieferungen, verknüpft und dadurch besonders sinnvoll personifiziert werden kann. Dies führt daher zu einer Komforterhöhung für den Insassen des Kraftfahrzeugs.

Des Weiteren sieht eine Ausgestaltungsform vor, dass die Bestellfunktion im Kraftfahrzeug aktiviert wird, falls festgestellt wird, dass eine vorgegebene Fahraktion vom Kraftfahrzeug durchgeführt wurde. Es kann zum Beispiel vorgesehen sein, das immer dann, wenn das Kraftfahrzeug eine Schnellstraße verlässt, der Insasse des Kraftfahrzeugs potentiell Interesse an einer Essenslieferung hat. Sobald das Kraftfahrzeug daher registriert, dass die Schnellstraße im Rahmen der Fahrroute zum Fahrziel verlassen wurde, wird die Bestellfunktion angezeigt, sodass der Insasse entscheiden kann, ob er demnächst eine Lieferung von Essen ins Kraftfahrzeugs auf der weiteren Fahrt wünscht. Es kann nämlich hinterlegt sein, dass immer dann, wenn sich beispielsweise der Fahrer des Kraftfahrzeugs entschließt, die vorgeschlagene aktuelle Fahrroute beispielsweise auf einer Schnellstraße über eine Ausfahrt der Schnellstraße zu verlassen, dass diese Fahraktion, das heißt das Verlassen der Schnellstraße an einer Abfahrt mit einer Abweichung zur vorgeschlagenen Fahrroute eines Navigationssystems, mit einem Essenswunsch des Insassen verknüpft ist. Daraufhin wird automatisch und ohne eine erneute Abfrage ein neues Zwischenziel generiert, und zwar ein Treffen, das heißt Koordinaten eines Treffens mit einem mobilen Übergabesystem eines Restaurants, und zwar weil diese Fahraktion mit einem Essenswunsch verknüpft im System hinterlegt ist. Das Navigationssystem wird daraufhin also nicht wiederholt versuchen, den Fahrer zurück auf die Schnellstraße zu leiten, sondern wird zunächst überprüfen, ob sich beispielsweise in der Umgebung ein potentieller Anbieter befindet und die entsprechenden Anbieterinformationsdaten sowie ermittelte Koordinaten und ein ermittelter Zeitpunkt des Treffens im Kraftfahrzeug anzeigen sowie die entsprechende Bestellfunktion bereitstellten. Hierbei kann als vorgegebene Umgebung zum Beispiel ein 30 Kilometer-Radius oder eine 15-minütige Fahrzeit vom Ort der Abfahrt von der Schnellstraße hinterlegt sein, sodass ein mit dem Abfahren von der Schnellstraße verbundener Umweg letztendlich so klein wie möglich gehalten werden kann.

Es können in diesem Zusammenhang generell verschiedene vorgegebenen Fahraktionen hinterlegt sein. Es kann zum Beispiel außerdem eine feste Ortsverknüpfung vorgesehen sein, sodass beispielsweise stets bei einer Entfernung von beispielsweise 50 Kilometern vom Fahrziel die Bestellfunktion angezeigt und als aktivierbare Bestellfunktion im Kraftfahrzeug für den Insasse bereitgestellt wird. Die hierbei vorgegebene Fahraktion kann bevorzugt vom Insasse des Kraftfahrzeugs vorgegeben werden und beispielsweise mithilfe des Insassenprofils oder einer entsprechenden Einstellung im Kraftfahrzeug vorgegeben werden. Hierbei wird beispielsweise keine Bestellwahrscheinlichkeit selbst ermittelt sondern rein abhängig von der beobachteten Fahraktion die aktivierbare Bestellfunktion im Kraftfahrzeug bereitgestellt oder sogar bereits automatisch aktiviert. Dies eignet sich besonders für den Insassen des Kraftfahrzeugs der Verhaltensroutinen und Gewohnheiten aufweist, die beispielsweise mit einem Ort, einem Fahrmanöver oder einer Entfernung zum Fahrziel verknüpft sind und die daher mit geringem Aufwand zur Bestellung des Lieferns des Bestellobjekt ausgewertet und berücksichtigt werden können.

Eine weitere besonders vorteilhafte Ausgestaltungsform der Erfindung sieht vor, dass an den zumindest einen potentiellen Anbieter, zu dem Anbieterinformationsdaten ermittelt wurden, ein Anfragesignal ausgesendet wird. Mittels dieses Anfragesignals wird angefragt, ob die Lieferung des Bestellobjekts zu den ermittelten Koordinaten und zum ermittelten Zeitpunkt des Treffens von dem zumindest einen potentiellen Anbieter angeboten wird. Nur falls ein Antwortsignal empfangen wird, gemäß dem die Anfrage bestätigt wird, wird die aktivierbare Bestelloption für den Anbieter bereitgestellt. Falls also eine Lieferung des Bestellobjekts zum ermittelten Zeitpunkt oder auch zum Ort der ermittelten Koordinaten nicht möglich ist, beispielsweise aufgrund einer hohen Auslastung einer Küche, in der das Bestellobjekt zunächst zubereitet werden muss, oder aufgrund einer hohen Auslastung des mobilen Übergabesystems, wird dies bereits vor dem Bereitstellen der Bestellobjekt festgestellt und entsprechend berücksichtigt. Es kann dennoch möglich sein, dass der potentielle Anbieter, dessen Antwortsignal angibt, dass die Lieferung des Bestellobjekts zu den ermittelten Koordinaten und zu dem ermittelten Zeitpunkt des Treffens nicht möglich ist, dennoch angezeigt wird, sodass beispielsweise, falls dennoch eine Lieferung des Bestellobjekts von dem entsprechenden Anbieter gewünscht sein sollte, beispielsweise ein zusätzlicher Umweg oder eine zusätzliche Wartezeit von Seiten des Kraftfahrzeugs auf Wunsch des Insassen akzeptiert werden kann. Die Ermittlung der Koordinaten und des Zeitpunkts des Treffens berücksichtigt also sowohl die entsprechenden Voraussetzungen für das Kraftfahrzeug als auch für den potentiellen Anbieter beziehungsweise das mobile Übergabegerät. Hierdurch wird sichergestellt, dass nur die Bestelloption aktiviert werden kann, deren Umsetzung tatsächlich und somit real möglich ist, sodass keine Lieferung eines Bestellobjekts bestellt wird, die zu den, zum Beispiel vom Kraftfahrzeug berechneten, ermittelten Koordinaten und zu dem ermittelten Zeitpunkt des Treffens überhaupt nicht möglich ist. Hierdurch wird das Bestellen des Lieferns des Bestellobjekts besonders zuverlässig.

Gemäß einer besonders vorteilhaften Ausgestaltungsform ist es vorgesehen, dass die Anbieterinformationsdaten aktuelle Bestellzeitdaten umfassen. Die Bestellzeitdaten werden unter Anwendung des die aktuelle Verkehrslage beschreibenden Verkehrslagekriteriums und dem Planungskriterium kontinuierlich erzeugt. So wird also beispielsweise nach jeweiligen vorgegebenen Zeitabständen, beispielsweise zyklisch nach jeweils einer Minute, immer wieder erneut bestimmt, welche aktuellen Bestellzeitdaten vorliegen. Diese Bestellzeitdaten geben an, bis zu welchem maximalen Zeitpunkt die Bestelloption aktivierbar ist, um die Lieferung des Bestellobjekt zu den ermittelten Koordinaten und zum ermittelten Zeitpunkt des Treffens zu bestellen. Letztendlich wird hierdurch mithilfe einer dynamischen Anzeige kontinuierlich aktualisiert bereitgestellt, wie viel Zeit dem Insasse zu einer verbindlichen Bestellung bleibt, damit er noch rechtzeitig die Lieferung beim ermittelten Treffen in Anspruch nehmen kann.

Der jeweilige bestimmte maximale Zeitpunkt kann gegebenenfalls von einem ausgewählten Gericht, das heißt beispielsweise von einem Aufwand der Zubereitung des ausgewählten Gerichts, abhängig sein. Für jeden potentiellen Anbieter, das heißt für jeden Lieferservice, wird also dem Insasse dynamisch angezeigt, bis wann die verbindliche Bestellung ausgelöst werden muss, um noch die zeitgerechte Übergabe am ermittelten Treffens in Anspruch nehmen zu können. Je nach aktueller Verkehrslage sowie nach beispielsweise aktuell vorliegender Menge von Bestellungen bei dem potentiellen Anbieter können diese Bestellzeitdaten schwanken. Tritt beispielsweise plötzlich ein Verkehrsstau zwischen dem Restaurant des potentiellen Anbieters und den ermittelten Koordinaten des Treffens auf, kann es beispielsweise zu einer Verkürzung des maximalen Zeitpunkts kommen. Beispielsweise wird aufgrund des Verkehrsstaus eine frühere Bestellung der Lieferung des Bestellobjekts bei dem potentiellen Anbieter zum Einhalten des ermittelten Treffens nötig als es bei einer ruhigen, entspannten Verkehrslage der Fall wäre. Während der Anzeige der ermittelten Anbieterinformationsdaten, der ermittelten Koordinaten und des ermittelten Zeitpunkts des Treffens wird auf der Anzeigeeinrichtung also beispielsweise zusätzlich der bestimmte maximale Zeitpunkt und somit die aktuellen Bestellzeitdaten angegeben. Diese Angabe kann beispielsweise zusammen mit der bereitgestellten aktivierbaren Bestelloption angezeigt werden. Hierdurch kann der Insasse bereits bei der Auswahl des von ihm gewünschten Bestellobjekts einschätzen, wie schnell und bis wann er sich für ein verbindliches Bestellen des Bestellobjekts entscheiden muss und kann dadurch komfortabel gegebenenfalls seinen entsprechenden Entscheidungsprozess durchführen. Dies führt zu einer zusätzlichen Komforterhöhung für den Insasse, da dieser sich beispielsweise nicht zu einer schnellen Aktivierung des Bestellobjekt gezwungen fühlt und daher übereilte Entscheidungen betreffend das Bestellobjekt vermeiden kann. Hierdurch wird ein womöglich beim Anwenden des Verfahrens entstehendes Stresspotential aufgrund eines Entscheidungsdrucks aufgrund einer angenommenen, in Realität jedoch nicht vorhandenen Zeitknappheit im Rahmen der Entscheidungsfindung reduziert.

Eine andere Ausgestaltungsform der Erfindung sieht vor, dass nachdem die Bestelloption aktiviert wurde, unter Anwendung eines Realisierungskriteriums kontinuierlich überprüft wird, ob die Lieferung des Bestellobjekt zu den ermittelten Koordinaten und zum ermittelten Zeitpunkt des Treffens weiterhin realisierbar ist. Es wird also kontinuierlich, das heißt beispielsweise in vorgegebenen Zeitabständen von typischerweise einer Minute, erneut überprüft, ob die zu Beginn ermittelten Koordinaten sowie der ermittelte Zeitpunkt des Treffens des Kraftfahrzeugs mit dem mobilen Übergabesystem weiterhin einhaltbar sind, und zwar sowohl von Seiten des Kraftfahrzeugs als auch von Seiten des mobilen Übergabesystems und des potentiellen Anbieters her. Das Realisierungskriterium umfasst beispielsweise Informationen zur aktuellen Verkehrslage, das heißt das Verkehrslagekriterium sowie das Planungskriterium. Im Rahmen des Realisierungskriteriums werden also beispielsweise die Lieferroute sowie die Lieferzeit des mobilen Übergabesystems, die aktuelle Auslastung der Küche des potentiellen Anbieters des Essens und/oder ein aktueller Fahrstil des Fahrers des Kraftfahrzeugs, falls dieser manuell eine Geschwindigkeit des Kraftfahrzeugs vorgibt, berücksichtigt. Falls nun festgestellt wird, dass die Lieferung des Bestellobjekt zu den ermittelten Koordinaten und zum ermittelten Zeitpunkt des Treffens unrealisierbar ist, werden unter Anwendung des Verkehrslagekriteriums sowie des Planungskriteriums alternative Koordinaten und/oder ein alternativer Zeitpunkt eines alternativen Treffens ermittelt. Das Kraftfahrzeug wird daraufhin zumindest teilautonom zum alternativen Treffen angesteuert.

Wird also beispielsweise festgestellt, dass eine Lieferung zum gewünschten Zeitpunkt auf einem Parkplatz entlang der Fahrroute nicht möglich ist, beispielsweise da es zu zeitlichen Verzögerungen bei der Herstellung des gewünschten Gerichts gekommen ist, kann automatisch ein alternativer Übergabeort, beispielsweise drei Kilometer weiter auf der Fahrroute, jedoch näher zum Restaurant des potentiellen Anbieters gelegen ermittelt und die Fahrroute des Kraftfahrzeugs sowie die Lieferroute des mobilen Übergabesystems automatisch entsprechend aktualisiert und angepasst werden. Der Übergabeort sowie die Übergabezeit der Essenslieferung wird also wiederholt generiert und gegebenenfalls dynamisch angepasst. Besonders ausschlaggebend bei einer derartigen dynamischen Anpassung mithilfe des Realisierungskriteriums ist eine aktuelle Verkehrslage, insbesondere wenn es beispielsweise zu Verzögerungen der Fahrt zu den ermittelten Koordinaten des Treffens kommt. Allerdings können auch weitere Kriterien relevant werden, wie die bereits genannte Auslastung der Küche des Anbieters, die Auslastung des mobilen Übergabesystems oder beispielsweise andere Ereignisse des mobilen Übergabesystems, wie beispielsweise eine Reifenpanne des Übergabesystems, sodass ein alternatives Übergabesystem die Lieferung des Bestellobjekts übernehmen muss. Mithilfe der Planung des alternativen Treffens wird ermöglicht, dass das tatsächlich stattfindende Treffen mit dem Kraftfahrzeug mit dem Übergabesystem mit einer hohen Wahrscheinlichkeit realisiert werden kann, da im Falle von Verzögerungen oder anderen Hindernissen betreffend das zuerst ermittelte Treffen durch die Generierung eines alternativen Treffens stets dennoch die Lieferung des Bestellobjekts an das Kraftfahrzeug mit hoher Wahrscheinlichkeit umgesetzt werden kann. Der Insasse muss sich somit nachdem er einmal die Bestellobjekt aktiviert hat, nicht mehr aktiv mit der tatsächlichen Lieferung des Bestellobjekts befassen und kann davon ausgehen, das stets automatisch das Treffen unter Berücksichtigung aller möglichen Umstände derart geplant und durch entsprechende Ansteuerbefehle für das Kraftfahrzeug und das mobile Endgerät umgesetzt wird, dass die Lieferung des Bestellobjekts mit sehr hoher Wahrscheinlichkeit in die Tat umgesetzt werden wird. Die Verlässlichkeit der Lieferung des Bestellobjekts ist somit sehr hoch. Sie ist insbesondere höher als bei herkömmlichen Verfahren, bei denen beispielsweise nur der zum Zeitpunkt der Aktivierung der Bestellobjekt ermittelte Ort und die dann ermittelte Zeit des Treffens berücksichtigt wird, ohne die dynamische Anpassung beispielsweise aufgrund der sich geänderten Verkehrslage durchzuführen.

Gemäß einer weiteren Ausgestaltungsform ist es vorgesehen, dass, sobald die Bestelloption aktiviert wurde, eine verbindliche Bestellung der Lieferung des Bestellobjekts an den entsprechenden Anbieter übermittelt wird, das heißt, es wird eine verbindliche Lieferung mittels des mobilen Übergabesystems an die ermittelten Koordinaten sowie zum ermittelten Zeitpunkt des Treffens angefordert. Es findet also keine erneute Abfrage statt, ob der Insasse tatsächlich verbindlich das Bestellobjekt bestellen möchte, sondern das Aktivieren der Bestelloption an sich wird bereits als ausgelöste Bestellung angesehen. Hierdurch wird das Bestellen der Lieferung des Bestellobjekts einfach und unkompliziert ermöglicht.

Alternativ dazu kann es in einer weiteren Ausgestaltungsform vorgesehen sein, dass, sobald die Bestelloption aktiviert wurde, eine aktivierbare Bestellbestätigungsoption im Kraftfahrzeug angezeigt wird. Erst nach dem Aktivieren der angezeigten Bestellbestätigungsoption wird eine verbindliche Bestellung der Lieferung des Bestellobjekts an den entsprechenden Anbieter übermittelt. Es findet also eine zusätzliche Abfrage und Anfrage beim potentiellen Besteller, das heißt dem Insassen des Kraftfahrzeugs, dahingehend statt, ob dieser tatsächlich die verbindliche Bestellung des ausgewählten Bestellobjekts wünscht. Hierbei kann es insbesondere vorgesehen sein, dass die Bestellzeitdaten zunächst angezeigt werden, die dem Insasse anzeigen, wie viel Zeit er noch hat, um die mit der Bestelloption aktivierte Bestellung tatsächlich beim Anbieter verbindlich zu bestellen. Hierdurch wird besonders intuitiv verdeutlicht, dass obwohl die Bestelloption bereits ausgewählt und bestimmt wurde, der Insasse sich weiterhin Zeit lassen kann, bis er die Bestellung tatsächlich verbindlich tätigt, sodass er beispielsweise, falls er spontan doch noch die Details seiner Bestellung ändern möchte oder sich gegen die Bestellung bei dem zuvor ausgewählten Anbieter entscheiden sollte, dies weiterhin als Option offen hat. Zusammen mit der dynamischen Anzeige der maximalen Zeitdauer bis zum maximalen Zeitpunkt, an dem er bestellen muss, kann hierdurch eine zusätzliche Überprüfungsebene realisiert werden, mithilfe derer sichergestellt werden kann, dass der Insasse die Lieferung des Bestellobjekts mittels des mobilen Übergabesystems tatsächlich wünscht beziehungsweise sich dieser Wunsch auch langfristig aus der Perspektive des Insassen hält.

Das erfindungsgemäße Kraftfahrzeug umfasst eine Steuereinrichtung. Diese Steuereinrichtung ist dazu ausgebildet, die jeweiligen im Kraftfahrzeug stattfindenden Verfahrensschritte des oben beschriebenen Verfahrens zum Liefern eines Bestellobjekts in ein zumindest teilautonom fahrendes Kraftfahrzeug durchzuführen. Das Kraftfahrzeug umfasst daher beispielsweise eine Kommunikationsschnittstelle, die für eine Car-to-X-Kommunikation oder eine Kommunikation über ein mobiles Datennetzwerk ausgebildet ist. Mittels dieser Kommunikationsschnittstelle wird eine Kommunikationsverbindung mit einer externen Einrichtung aufgebaut, über die entsprechende Anbieterinformationsdaten empfangen sowie die die aktuelle Verkehrslage beschreibenden Daten zum Anwendenden des Verkehrslagekriteriums übermittelt werden. Außerdem kann mittels der Kommunikationsschnittstelle und der Kommunikationsverbindung die Bestelloption, die aktiviert wurde, an den entsprechenden Anbieter weitergeleitet werden, sodass die Bestellung tatsächlich getätigt wird. Die in Zusammenhang mit dem erfindungsgemäßen Verfahren vorgestellten bevorzugten Ausgestaltungsformen und deren Vorteile gelten entsprechend, soweit anwendbar, für das erfindungsgemäße Kraftfahrzeug. Aus diesem Grund sind die entsprechenden Weiterbildungen des erfindungsgemäßen Kraftfahrzeugs hier nicht noch einmal beschrieben.

Die Erfindung stellt auch die Steuereinrichtung für das Kraftfahrzeug bereit. Die Steuereinrichtung weist eine Prozessoreinrichtung auf, die dazu ausgebildet ist, eine Ausführungsform des erfindungsgemäßen Verfahrens, das heißt die im Kraftfahrzeug stattfindenden Verfahrensschritte des erfindungsgemäßen Verfahrens, durchzuführen. Die Prozessoreinrichtung kann hierzu zum Beispiel einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die Ausgestaltungsform des erfindungsgemäßen Verfahrens, das heißt die im Kraftfahrzeug stattfindenden Verfahrensschritte, durchzuführen. Der Programmcode kann in einem Datenspeicher der Prozessoreinrichtung gespeichert sein.

Die Erfindung umfasst auch die Kombinationen der Merkmale der beschriebenen Ausgestaltungsformen.

Im Folgenden ist ein Ausführungsbeispiel der Erfindung beschrieben.

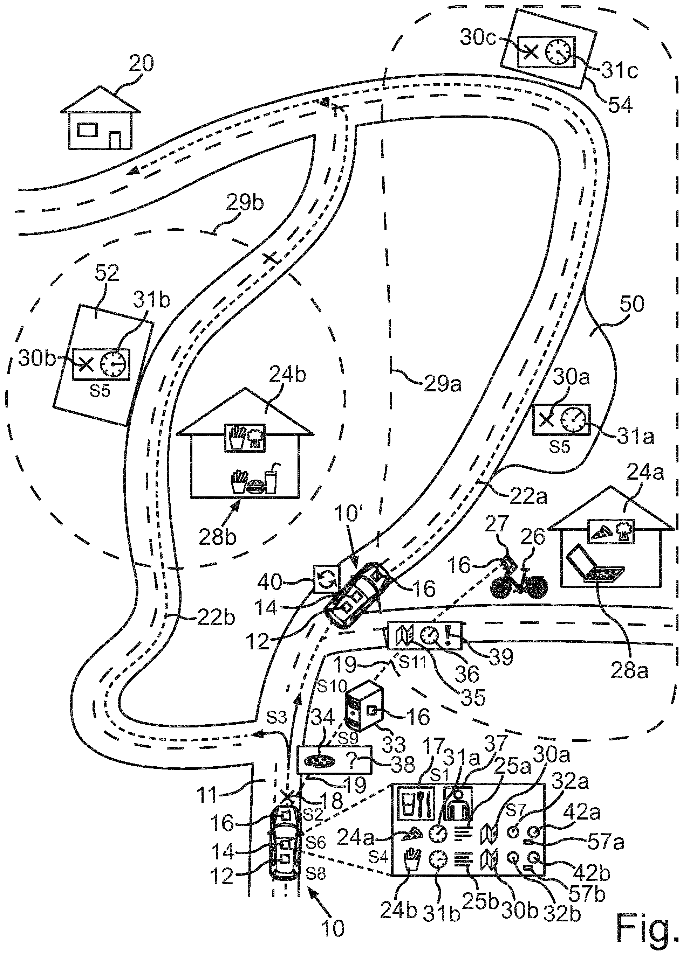

Hierzu zeigt die einzige Fig. eine schematische Darstellung eines Kraftfahrzeugs, dessen Insasse ein Liefern eines Bestellobjekts mittels eines mobilen Übergabesystems bestellt.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur sind funktionsgleiche Elemente jeweils mit denselben Bezugszeichen versehen.

In der einzigen Fig. ist ein Kraftfahrzeug 10 skizziert, dass auf einer Straße 11 zumindest teilautonom fährt. Das hier skizzierte Kraftfahrzeug 10 fährt sogar vollautonom auf der Straße 11, und umfasst eine Steuereinrichtung 12, eine Anzeigeeinrichtung 14 sowie eine Kommunikationsschnittstelle 16. Die Steuereinrichtung 12 ist unter anderem dazu ausgebildet, in eine Längsführung sowie eine Querführung des Kraftfahrzeugs 10 einzugreifen, das heißt das Kraftfahrzeug 10 zumindest teilautonom anzusteuern. Die Kommunikationsschnittstelle 16 ist dazu ausgebildet eine Kommunikationsverbindung 19 mit einer externen Einrichtung 33 aufzubauen. Diese Kommunikationsverbindung 19 kann als Car-to-X-Kommunikation oder als Kommunikation über ein mobiles Datennetzwerk oder ein Mobilfunknetz umgesetzt sein. Das Kraftfahrzeug 10 befindet sich momentan an der aktuellen Position 18, die in der Fig. mit einem Kreuz symbolisiert ist. Die Anzeigeeinrichtung 14 ist als berührungssensitiver Bildschirm im Kraftfahrzeug 10 ausgestaltet. Alternativ dazu kann es sich bei der Anzeigeeinrichtung 14 um einen berührungsempfindlichen Bildschirm eines Smartphones 27 eines Insassen des Kraftfahrzeugs 10 handeln, das in dem Kraftfahrzeug 10 angeordnet und mit der Steuereinrichtung 12 des Kraftfahrzeugs 10 gekoppelt ist, beispielsweise mithilfe einer Bluetooth-Verbindung zwischen dem Smartphone 27 und der Kommunikationsschnittstelle 16 des Kraftfahrzeugs 10. Alternativ dazu kann der Bildschirm im Kraftfahrzeugs 10 nicht berührungssensitiv ausgebildet sein, aber mit einer Bedieneinrichtung gekoppelt sein, sodass eine auf dem Bildschirm angezeigte aktivierbare Funktion mittels der Bedieneinrichtung, die einen Drehdrückschalter oder eine Taste umfasst, ausgewählt werden kann. Das Kraftfahrzeug 10 weist außerdem ein Navigationssystem auf, mithilfe dessen das Kraftfahrzeug 10 auf der Straße 11 entlang einer vorgegebenen Route angesteuert wird.

In einem ersten Verfahrensschritt S1 erfolgt ein Überprüfen, ob im Kraftfahrzeug 10 eine Bestellfunktion 17 aktiviert wurde. Hierfür wird ein entsprechendes auswählbares Bestellfunktionssymbol auf der Anzeigeeinrichtung 14 des Kraftfahrzeugs 10 dargestellt. Die Bestellfunktion 17 kann von dem Insassen des Kraftfahrzeugs 10 manuell aktiviert werden. Alternativ oder zusätzlich dazu ist es möglich, dass automatisch eine Bestellwunschwahrscheinlichkeit des Insassen des Kraftfahrzeugs 10 unter Anwendung eines Bestellwunschkriteriums ermittelt wird. Falls die ermittelte Bestellwunschwahrscheinlichkeit größer als eine vorgegebenen Grenzwahrscheinlichkeit ist, wird die Bestellfunktion 17 zur Aktivierung im Kraftfahrzeug 10 bereitgestellt. Das Bestellwunschkriterium kann typische Essenszeiten oder typische Bestellzeiten des Insassen des Kraftfahrzeugs 10 umfassen, sodass zu einer Mittagszeit oder einer anderen typischen Essenszeit des Insassen dieser Umstand erkannt, daraufhin zu der typischen Essenszeit oder Bestellzeit der Bestellwunsch des Insassen mit einer entsprechend hohen Bestellwunschwahrscheinlichkeit beziffert, daher automatisch die Bestellfunktion 17 zur Aktivierung im Kraftfahrzeug 10 angezeigt und diese dann durch Bedienung der Anzeigeeinrichtung 14, das heißt durch ein Berühren auf dem berührungssensitiven Bildschirm angezeigten entsprechenden Bestellfunktionssymbols, aktivierbar ist. Die Bestellfunktion 17 kann also automatisch, das heißt ohne dass zuvor in einer Menüfunktion der Anzeigeeinrichtung 14 die Bestellfunktion 17 aktiv ausgewählt und aktiviert wird, zur Aktivierung bereitgestellt werden.

Alternativ oder zusätzlich dazu, kann die Bestellfunktion 17 direkt aktiviert und/oder zur Aktivierung bereitgestellt werden, sobald festgestellt wird, dass eine vorgegebene Fahraktion vom Kraftfahrzeug 10 durchgeführt wurde. Bei einem nur teilautonom fahrenden Kraftfahrzeug 10, das der Insasse manuell ansteuert und dabei lediglich mithilfe des Navigationssystems Fahranweisungen hinsichtlich der Route erhält, kann somit, falls eine hinterlegte vorgegebene Fahraktion bekannt ist, die Aktivierung der Bestellfunktion 17 automatisch aktiviert werden, sobald die vorgegebene Fahraktion erfolgt ist. Hierbei kann die Aktivierung der Bestellfunktion 17 mit einem Abfahren von einer Schnellstraße und einem damit verbundenen Abweichen von der vorgeschlagenen Fahrroute 22a, 22b des Navigationssystems verknüpft sein, sodass dieses Fahrmanöver so interpretiert wird, als hätte der Insasse des Kraftfahrzeugs 10 die Bestellfunktion 17 manuell aktiviert.

In einem weiteren Verfahrensschritt S2 erfolgt ein Feststellen der aktuellen Position 18 sowie eines Fahrziels 20 des Kraftfahrzeugs 10. Das Fahrziel 20 ist hier ein Wohnhaus des Insassen des Kraftfahrzeugs 10. Die aktuelle Position 18 ist ein Punkt auf der Straße 11, an dem sich das Kraftfahrzeug 10 aktuell aufhält. Unter Anwendung eines Fahrroutenoptimierungskriteriums wird daraufhin zumindest eine Fahrroute 22a, 22b von der festgestellten aktuellen Position 18 zum festgestellten Fahrziel 20 ermittelt. Hier werden zwei mögliche Fahrrouten 22a, 22b ermittelt, die jeweils zu dem Fahrziel 20 führen. Diese unterscheiden sich in einer detaillierten Wegführung, gegebenenfalls in einer potentiellen Ankunftszeit am Fahrziel 20 sowie in einer insgesamt zurückgelegten Fahrstrecke. Hierbei werden jedoch keine Fahrrouten 22a, 22b ermittelt, die zu einer unerwünscht oder unverhältnismäßig großen Verlängerung der Fahrstrecke und/oder der Fahrzeit führen. Entsprechende Angaben werden mithilfe des Fahrroutenoptimierungskriteriums im Kraftfahrzeug 10 entweder standardmäßig hinterlegt oder vom Insassen vorgegeben. Das Ermitteln der zumindest einen Fahrroute 22a, 22b erfolgt in einem Schritt S3.

Falls die Bestellfunktion 17 aktiviert wurde, erfolgt in einem Schritt S4 ein Ermitteln von Anbieterinformationsdaten 25a, 25b von potentiellen Anbietern 24a, 24b. Diese potentiellen Anbieter 24a, 24b bieten eine Lieferung eines Bestellobjekts 28a, 28b mittels eines mobilen Übergabesystems 26 in einer vorgegebenen Umgebung 29a, 29b der zumindest einen ermittelten Fahrroute 22a, 22b an. Bei dem potentiellen Anbieter 24a handelt es sich um ein italienisches Restaurant und bei dem potentiellen Anbieter 24b um ein Fastfood-Restaurant. Der potentielle Anbieter 24a, das heißt das italienische Restaurant, bietet daher eine Lieferung einer Pizza als Bestellobjekt 28a an. Diese Pizza als Bestellobjekt 28a kann von dem potentiellen Anbieter 24a mittels eines Fahrradkuriers ausgeliefert werden. Dieser Fahrradkurier mit seinem Fahrrad stellt also das mobile Übergabesystem 26 dar. Der Fahrradkurier trägt ein mobiles Endgerät in Form eines Smartphones 27 bei sich, mittels dessen die Lieferung des Bestellobjekts 28a im Detail organisiert werden kann. Analog zu dem beschriebenen italienischen Restaurant als potentieller Anbieter 24a kann als alternativer potentieller Anbieter 24b das Fastfood-Restaurant die Lieferung eines Fastfood Menüs als Bestellobjekt 28b mittels des mobilen Übergabesystems 26 des Fastfood Restaurants in einer vorgegebenen Umgebung 29b des Fastfood-Restaurants anbieten. Bei der vorgegebenen Umgebung 29a, 29b handelt es sich jeweils um einen Lieferradius des jeweiligen potentiellen Anbieters 24a, 24b, in dem dieser bereit ist, mittels des mobilen Übergabesystems 26 das Bestellobjekt 28a, 28b auszuliefern. Die vorgegebene Umgebung 29a, in der der potentieller Anbieter 24a, das heißt das italienische Restaurant, das das Bestellobjekt 28a liefern würde, liegt, entlang der ersten Fahrroute 22a, wohingegen die vorgegebenen Umgebung 29b des potentieller Anbieters 24b, das heißt des Fastfood-Restaurants, in der das Fastfood-Restaurant das Bestellobjekt 28b liefern würde, entlang der zweiten Fahrroute 22b liegt.

Für jeden der potentiellen Anbieter 24a, 24b, von denen jeweilige Anbieterinformationsdaten 25a, 25b ermittelt wurden, wird in einem nächsten Schritt S5 ein Treffen des Kraftfahrzeugs 10 mit dem mobilen Übergabesystem 26 zum Liefern des Bestellobjekts 28a, 28b vom mobilen Übergabesystem 26 an das Kraftfahrzeug 10 ermittelt. Hierfür werden jeweils Koordinaten 30a, 30b sowie ein Zeitpunkt 31a, 31b des Treffens ermittelt. Bei den Koordinaten 30a des Treffens für den potentiellen Anbieter 24a wird eine Parkbucht 50 entlang der Fahrroute 22a ermittelt. Bei dem ermittelten Zeitpunkt 31a handelt es sich um einen Zeitpunkt 31a, der acht Minuten in der Zukunft liegt. Des Weiteren wurden die Koordinaten 30b für eine Lieferung des Bestellobjekts 28b mit dem potentiellen Anbieter 24b ermittelt, die auf einem Parkplatz 52 entlang der Fahrroute 22b liegt. Bei dem ermittelten Zeitpunkt 31b handelt es sich um einen Zeitpunkt 31b, der 15 Minuten in der Zukunft liegt Die ermittelten Koordinaten 30a, 30b sowie der ermittelte Zeitpunkt 31a, 31b wurden jeweils unter Anwendung eines eine aktuelle Verkehrslage beschreibenden Verkehrslagekriteriums sowie eines Planungskriteriums ermittelt. Der Zeitpunkt 31a, 31b wird derart ermittelt, dass es zu keiner oder nur einer kurzen Wartezeit von typischerweise weniger als fünf Minuten für den Insassen des Kraftfahrzeugs 10 an den ermittelten Koordinaten 30a, 30b kommen wird, wenn das dortige Treffen zu dem entsprechenden Zeitpunkt 31a, 31b gebucht werden würde. Mithilfe der genannten Kriterien kann eine angespannte Verkehrslage auf der entsprechenden Fahrroute 22a, 22b ebenso berücksichtigt werden wie eine aktuelle Lieferzeitdauer des jeweiligen potentiellen Anbieters 24a, 24b.

In einem nächsten Schritt S6 werden die ermittelten Anbieterinformationsdaten, die beispielsweise den Namen des potentiellen Anbieters 24a, 24b sowie Details zu den jeweiligen Bestellobjekten 28a, 28b umfassen, zusammen mit den ermittelten Koordinaten 30a, 30b und dem ermittelten Zeitpunkt 31a, 31b des Treffens für jeden der potentiellen Anbieter 24a, 24b, von dem jeweilige Anbieterinformationsdaten 25a, 25b ermittelt wurden, auf der Anzeigeeinrichtung 14 im Kraftfahrzeug 10 angezeigt. Hierbei wird beispielsweise mithilfe eines Symbols die Art des Restaurants, das heißt die Art des vom potentiellen Anbieters 24a, 24b angebotenen Essens symbolisiert. Hier kann für die Pizzeria ein Pizzastück und für das Fastfood-Restaurant eine Portion Pommes Frites angezeigt werden. Außerdem werden mittels der Anzeigeeinrichtung 14 der ermittelte Zeitpunkt 31a, 31b des Treffens, Details zu dem Angebot an Bestellobjekten 28a, 28b des jeweiligen potentiellen Anbieters 24a, 24b in Form der Anbieterinformationsdaten 25a, 25b sowie Informationen zu den Koordinaten 30a, 30b des Treffens angezeigt.

In einem nächsten Schritt S7 wird eine aktivierbare Bestelloption 32a, 32b zum Bestellen des Lieferns des Bestellobjekts 28a, 28b bei dem potentiellen Anbieter 24a, 24b bereitgestellt. Hierfür kann beispielsweise ein Knopf auf dem berührungssensitiven Bildschirm der Anzeigeeinrichtung 14 angezeigt werden. Sobald die Bestelloption 32a, 32b aktiviert wurde, kann sofort eine verbindliche Bestellung der Lieferung des Bestellobjekts 28a, 28b an den entsprechenden Anbieter 24a, 24b übermittelt werden. Alternativ dazu kann es vorgesehen sein, dass, sobald die Bestelloption 32a, 32b aktiviert wurde, eine aktivierbare Bestellbestätigungsoption 42a, 42b angezeigt wird und erst nach dem Aktivieren dieser Bestellbestätigungsoption 42a, 42b die verbindliche Bestellung der Lieferung des Bestellobjekts 28a, 28b an den entsprechenden Anbieter 24a, 24b übermittelt wird. Es kann also einen zusätzliche Abfrage vorgesehen sein, die abfragt, ob der Insasse tatsächlich die verbindliche Bestellung der Bestelloption 32a, 32b wünscht.

In Zusammenhang mit der Bereitstellung der aktivierbaren Bestelloption 32a, 32b kann es vorgesehen sein, dass, falls Anbieterinformationsdaten 25a, 25b von mehreren potentiellen Anbietern 24a, 24b ermittelt wurden, wie es hier der Fall ist, zunächst unter Anwendung eines Bestellverhaltenskriteriums auf die ermittelten Anbieterinformationsdaten 25a, 25b eine jeweilige Bestellwahrscheinlichkeit bei dem jeweiligen Anbieter 24a, 24b ermittelt wird. Die Bestellwahrscheinlichkeit beziffert eine Wahrscheinlichkeit, mit der der Insasse des Kraftfahrzeugs 10 bei dem jeweiligen ermittelten potentiellen Anbieter 24a, 24b das Bestellobjekt 28a, 28b bestellt. Die ermittelte Bestellwahrscheinlichkeit wird für das Bereitstellen der aktivierbaren Bestelloption 32a, 32b für das Bestellobjekt 28a, 28b ausgewertet. Das Bestellverhaltenskriterium kann vorherige Bestellungen des Insassen, also eine Bestellhistorie, und/oder eingestellte Präferenzen umfassen. Mithilfe des Bestellverhaltenskriteriums kann somit zumindest eine von den folgenden Angaben hinterlegt werden: eine maximale Zeitdauer bis zur Lieferung des Bestellobjekts 28a, 28b, ein maximaler Preis des Bestellobjekts 28a, 28b, eine maximale Zeitverzögerung einer Ankunft am Fahrziel 20 durch Ansteuern der ermittelten Koordinaten 30a, 30b des Treffens, eine minimale durchschnittliche Kundenbewertung des potentiellen Anbieters 24a, 24b und/oder hinterlegte Bestellverhaltensdaten des Insassen. Die Bestellverhaltensdaten können beispielsweise mittels eines Insassenprofils 37 hinterlegt sein. Durch Auswählen eines entsprechenden Insassenprofilsymbols des Insassenprofils 37 auf dem berührungssensitiven Bildschirm kann dieses beispielsweise manuell vom Insassen im Kraftfahrzeug 10 aktiviert und/oder eingestellt werden. Das Insassenprofil 37 kann alternativ oder zusätzlich dazu auf einem mobilen Endgerät, einem Computer und/oder einem Tablet des Insassen konfiguriert werden und/oder in der externen Einrichtung 33 hinterlegt sein. Die hinterlegten Bestellverhaltensdaten können die Bestellhistorie, Informationen zu einer Lebensmittelallergie des Insassen, vom Insassen angegebene Lieblingsgerichte und Lieblingsgetränke und/oder Angaben zu typischen Essenszeiten des Insassen umfassen. Im Insassenprofil 37 kann außerdem das Bestellverhaltenskriterium an sich sowie ein Bestellwunschkriterium des Insassen hinterlegt sein. Das Bestellwunschkriterium wurde weiter oben bereits im Zusammenhang mit der automatischen Bereitstellung der Bestellfunktion 17 zur Aktivierung im Kraftfahrzeug 10 beschrieben. Das Insassenprofil 37 kann von der externen Einrichtung 33 über die Kommunikationsverbindung 19 geladen werden, sodass sowohl zum Bereitstellen der Bestelloption 32a, 32b sowie gegebenenfalls zur Bereitstellung der Bestellfunktion 17 die dort extern hinterlegten Daten ausgewertet und intern im Kraftfahrzeug 10 berücksichtigt werden können. Es ist hierbei außerdem möglich, dass das Insassenprofil 37 in der Steuereinrichtung 12 des Kraftfahrzeugs 10 gespeichert hinterlegt ist.

In einem nächsten Schritt S8 wird, falls die Bestelloption 32a, 32b von einem der potentiellen Anbieter 24a, 24b vom Insassen aktiviert wurde, zumindest teilautonom das Kraftfahrzeug 10 zum ermittelten Treffen mit dem mobilen Übergabesystem 26 für das Liefern des Bestellobjekts 28a, 28b von diesem potentiellen Anbieter 24a, 24b angesteuert. Das Kraftfahrzeug 10, das aktuell voll autonom von der Steuereinrichtung 12 angesteuert wird, wird also ohne weiteres Zutun des Insassen des Kraftfahrzeugs 10 vollautonom zum ermittelten Treffen mit dem mobilen Übergabesystem 26 gefahren. Entscheidet sich der Insasse beispielsweise für die Bestellung einer Pizza als Bestellobjekt 28a beim potentiellen Anbieter 24a, das heißt dem italienischen Restaurant, wird das Kraftfahrzeug 10 automatisch auf die erste Fahrroute 22a geleitet und zwar derart, dass es zum ermittelten Zeitpunkt 31a an den ermittelten Koordinaten 30a in der Parkbucht 50 ankommen wird.

Nachdem die Bestelloption 32a aktiviert wurde, werden Bestelldaten 34, die die Bestellung der Lieferung des Bestellobjekts 28a beschreiben, das heißt hier die Lieferung der Pizza als Bestellobjekt 28a, sowie die ermittelten Koordinaten 30a und der ermittelte Zeitpunkt 31a des Treffens des Kraftfahrzeugs 10 mit dem mobilen Übergabesystem 26 an die externe Einrichtung 33 übermittelt. Nach diesem Schritt S9 erfolgt in einem Schritt S10 ein Ermitteln einer Lieferroute 35 sowie einer Lieferzeit 36 für das mobile Übergabesystem 26 zum ermittelten Treffen unter Anwendung eines Lieferplanungskriteriums. Dieses Ermitteln kann in der externen Einrichtung 33 erfolgen, die als Servereinrichtung ausgebildet sein kann. In einem nächsten Schritt S11 wird die ermittelte Lieferroute 35 sowie die ermittelte Lieferzeit 36 an das mobile Übergabesystem 26 übermittelt. Hierbei werden die ermittelte Lieferroute 35 sowie die ermittelte Lieferzeit 36 als jeweilige Daten an das Smartphone 27 des Fahrradkuriers übermittelt, der mit seinem Fahrrad, das heißt mittels des mobilen Übergabesystems 26, die Pizza als Bestellobjekt 28a zum ermittelten Treffen ausliefern wird. Die entsprechende Datenübertragung erfolgt über die externe Einrichtung 33, die eine entsprechende Kommunikationsverbindung 19 mit einer Kommunikationsschnittstelle 16 des Smartphones 27 des Fahrradkuriers aufbaut und zumindest für die Datenübertragung unterhält.

Hierdurch wird letztendlich ermöglicht, dass zum ermittelten Zeitpunkt 31a, der der Lieferzeit 36 entspricht, an den ermittelten Koordinaten 30a in der Parkbucht 50 die Lieferung und anschließende Übergabe des Bestellobjekts 28a, das heißt der Pizza, von dem mobilen Übergabesystem 26 an das Kraftfahrzeug 10 erfolgt. Um sicherzugehen, dass diese Lieferung und Übergabe tatsächlich realisierbar ist, werden zum einen an den potentiellen Anbieter 24a, 24b, zu dem Anbieterinformationsdaten 25a, 25b ermittelt wurden, ein Anfragesignal 38 ausgesendet, mittels dessen angefragt wird, ob die Lieferung des Bestellobjekts 28a, 28b zu den ermittelten Koordinaten 30a, 30b und zum ermittelten Zeitpunkt 31a, 31b des Treffens von dem zumindest einen potentiellen Anbieter 24a, 24b angeboten wird. Nur falls ein Antwortsignal 39 empfangen wird, gemäß dem die Anfrage, die in Form des Anfragesignals 38 ausgesendet wurde, bestätigt wird, wird die aktivierbare Bestelloption 32a, 32b für diesen Anbieter 24a, 24b überhaupt bereitgestellt. Meldet das Fastfood-Restaurant, das heißt der potentielle Anbieter 24b, mithilfe des Antwortsignals 39, dass eine Lieferung des Fastfood-Menüs aufgrund von einer starken Auslastung des Fastfood Restaurants zu dem ermittelten Zeitpunkt 31b an den ermittelten Koordinaten 30b auf den Parkplatz 52 nicht realisierbar und möglich ist, wird die entsprechende Bestelloption 32b gar nicht erst auf der Anzeige, das heißt mittels der Anzeigeeinrichtung 14 des Kraftfahrzeugs 10, zum Aktivieren angeboten. In diesem Fall könnte der Insasse lediglich beim potentiellen Anbieter 24a, das heißt bei dem italienischen Restaurant, das Bestellobjekt 28a bestellen.

Die Anbieterinformationsdaten 25a, 25b, die unter anderem auf der Anzeigeeinrichtung 14 mit angezeigt werden, umfassen außerdem aktuelle Bestellzeitdaten. Die aktuellen Bestellzeitdaten werden unter Anwendung des die aktuelle Verkehrslage beschreibenden Verkehrslagekriteriums und des Planungskriteriums kontinuierlich erzeugt. Es können pro Minute einmal aktuelle Bestellzeitdaten für den jeweiligen potentiellen Anbieter 24a, 24b ermittelt werden, oder dieses Ermitteln erfolgt häufiger oder noch seltener. Die Bestellzeitdaten geben an, bis zu welchem maximalen Zeitpunkt 57a, 57b die Bestelloption 32a, 32b aktivierbar ist, um die Lieferung des Bestellobjekts 28a, 28b zu den ermittelten Koordinaten 30a, 30b und zum ermittelten Zeitpunkt 31a, 31b des Treffens zu bestellen. Es kann die verbleibende Zeit bis zu diesem maximalen Zeitpunkt 57a, 57b, zu dem die Bestelloption 32a, 32b zu aktivieren ist, um das ermittelten Treffen einhalten zu können, zusätzlich zum ermittelten Zeitpunkt 31a, 31b auf der Anzeigeeinrichtung 14 angezeigt werden. Ändert sich nun die Verkehrslage, falls beispielsweise unerwarteter Weise ein Stau entsteht, oder kommt es zu einer Verzögerung der Zubereitung der bestellten Pizza, das heißt des Bestellobjekts 28a, kann dementsprechend die aktuelle verbleibende Zeit bis zu der verbindlichen Bestellung als maximaler Zeitpunkt 57a, 57b auf der Anzeigeeinrichtung 14 angezeigt werden. Der Insasse kann daraufhin entscheiden, ob er weiterhin die Lieferung des Bestellobjekts 28a, 28b, das heißt beispielsweise der Pizza wünscht, obwohl sich deren Lieferung beispielsweise aufgrund eines Verkehrsstaus auf der Straße 11 verzögern wird, da beispielsweise das Kraftfahrzeug 10 erst später an den ermittelten Koordinaten 30a der Parkbucht 50 ankommen wird als zu Beginn in den ersten Verfahrensschritten S1 bis S4 anzunehmen war. Zudem kann, wenn eine gewisse Zeit zwischen dem Aktivieren der Bestellfunktion 17 und dem tatsächlichen Aktivieren der Bestelloption 32a, 32b vergangen ist, sichergestellt werden, dass zum Zeitpunkt der Aktivierung der Bestelloption 32a, 32b stets aktuelle Informationen zur Verfügung stehen, sodass keine Bestellung verbindlich abgegeben wird, die nicht mehr den aktuellen Bestellzeitdaten entspricht, da sich beispielsweise Lieferverzögerungen beim Anbieter 24a, 24b oder eine Verzögerung aufgrund der aktuellen Verkehrssituation ergeben haben. Hierbei wird jedoch zunächst nur der maximale Zeitpunkt 57a, 57b bis zum Aktivieren der Bestelloption 32a, 32b angezeigt.

Des Weiteren wird durch Anwendung eines Realisierungskriteriums 40 nachdem die Bestelloption 32a, 32b aktiviert wurde, kontinuierlich überprüft, ob die Lieferung des Bestellobjekts 28a, 28b zu den ermittelten Koordinaten 30a, 30b und zum ermittelten Zeitpunkt 31a, 31b des Treffens weiterhin realisierbar ist. Dies wird anhand des Kraftfahrzeugs 10' in der Figur skizziert. Im Rahmen der Anwendung des Realisierungskriteriums 40 wird die aktuelle Verkehrslage sowie die aktuelle Planung des Anbieters 24a, 24b, das heißt das Verkehrslagekriterium sowie das Planungskriterium, berücksichtigt. Falls festgestellt wird, dass die Lieferung des Bestellobjekts 28a, 28b zu den ermittelten Koordinaten 30a, 30b und zum ermittelten Zeitpunkt 31a, 31b des Treffens nicht mehr realisierbar ist, werden unter Anwendung des die aktuelle Verkehrslage beschreibenden Verkehrslagekriteriums sowie des Planungskriteriums alternative Koordinaten 30c und/oder ein alternativer Zeitpunkt 31c eines alternativen Treffens ermittelt und das Kraftfahrzeug 10' zumindest teilautonom zum alternativen Treffen gesteuert. Als alternativer Treffpunkt können beispielsweise aufgrund von Lieferverzögerungen der Lieferung der bestellten Pizza, das heißt des Bestellobjekts 28a, als alternative Koordinaten 30c Koordinaten eines Stellplatzes 54 ermittelt werden, der sich ebenfalls auf der Fahrroute 22a zum Fahrziel 20 befindet. Ein dortiges Treffen findet jedoch nicht wie zuvor ermittelt in acht Minuten in der Zukunft sondern erst 20 Minuten in der Zukunft statt. Hierdurch wird sich die Lieferung des Bestellobjekts 28a, 28b für den Insassen des Kraftfahrzeugs 10' verzögern, jedoch wird ohne einen zusätzlichen Umweg, das heißt ohne Abweichung von der bereits ausgewählten Fahrroute 22a, dennoch eine Lieferung des gewünschten Bestellobjekts 28a und somit der Pizza des italienischen Restaurants ermöglicht. Bevorzugt weicht der alternative Zeitpunkt 31c nicht von dem zuvor ermittelten Zeitpunkt 31a ab, sondern nur die Koordinaten 33a, 33b, 33c des Treffens ändern sich. Ein Übergabeort sowie eine Übergabezeit für die Essenslieferung wird somit dynamisch generiert und außerdem dynamisch an aktuelle Bedingungen angepasst. Nachdem nämlich das italienische Restaurant als Anbieter 24a ausgewählt wurde und zudem das Bestellobjekt 28a, das heißt die Pizza, ausgewählt wurde, werden dynamisch zuerst als Lieferort die ermittelten Koordinaten 30a der Parkbucht 50 ermittelt, jedoch aufgrund von einer veränderten Verkehrslage oder veränderten Lieferbedingungen beziehungsweise einer veränderten Lieferungslage beim italienischen Restaurant der alternative Lieferort in Form der alternativen Koordinaten 30c des Stellplatzes 54 ermittelt und automatisch angefahren. Die entsprechenden alternativen Koordinaten 30c sowie der alternative Zeitpunkt 31c werden als alternative Lieferroute 35 und also alternative Lieferzeit 36 an das mobile Übergabesystem 26 übermittelt, sodass die tatsächliche Lieferung und Übergabe weiterhin reibungslos realisierbar ist.

Insgesamt zeigt das Beispiel eine komfortgerechte Ausführung einer Bestellung bei einem Dienstleister in Kombination mit einer Routenführung. Relevant ist hierbei außerdem, dass gegebenenfalls vor dem Aktivieren der Bestellbestätigungsoption 42a, 42b oder gegebenenfalls nur vor dem Aktivieren der Bestelloption 32a, 32b die Bestellung noch nicht ausgelöst wird und somit der bisherige Vorgang unverbindlich abgebrochen und/oder zu einer Anzeige der ermittelten Anbieterinformationsdaten 25a, 25b sowie der ermittelten Koordinaten 30a, 30b und des ermittelten Zeitpunkts 31a, 31b des Treffens auf der Anzeigeeinrichtung 14 des Kraftfahrzeugs 10 zurückgewechselt werden kann.

Wird eine Essensbestellung von dem Insassen bereits vor Antritt der Fahrt oder während der Fahrt mit einem (autonom fahrenden) Kraftfahrzeug 10 bestellt, soll das bestellte Essen dann jedoch von einem Dienstleister an einem dynamisch veränderbaren Ort übergeben werden können, der vom Insasse angefahren beziehungsweise durchfahren wird. Dies ist für Szenarien beim autonomen Fahren interessant. Sogar der Dienstleister kann ebenfalls dynamisch und situationsbedingt (unter anderem aufgrund der Verkehrslage) veränderbar den Übergabeort anpassen. Bei zukünftigen vollautomatisch fahrenden Kraftfahrzeugen werden Szenarien häufiger vorkommen, bei denen Fahrzeuginsassen entspannen oder sogar in der Fahrzeugkabine einschlafen werden. Dabei werden unter anderem Szenarien betrachtet, bei denen Mobilitätskunden mit einem vollautomatisch fahrenden Kraftfahrzeug 10 über Nacht von einem Startort, das heißt der aktuellen Position 18, zu einem Zielort, da heißt dem Fahrziel 20, gebracht werden wollen. In diesem Zusammenhang kann es vorkommen, dass der Insasse nachts im Kraftfahrzeug 10 aufwacht und etwas zu Essen und/oder Trinken bestellen, dafür aber nicht das Kraftfahrzeug 10 verlassen möchte. Der Insasse kann im Vorfeld Einschränkungen hinsichtlich des Bestellvorganges hinterlegen, um den Vorgang zu vereinfachen, und zwar:
- maximale Zeitdauer bis zur Übergabe des Essens beziehungsweise möglichst schnelle Belieferung;
- maximaler Preis des Gerichts;
- maximale Zeitverzögerung durch gegebenenfalls Änderung der Fahrroute 22a, 22b;
- Mindest-Positiv-Bewertung von andern Kunden in einem Online-Bewertungstool für den Lieferservice 24a, 24b (oder sogar für ein bestimmtes Gericht oder Menü);
- Priorisierung für bestimmte Essensgerichte beziehungsweise Hinterlegung von Präferenzen für das Essen und/oder das Getränk (Allergien, No-Gos für bestimmte Speisen).

Dem Besteller, also dem Insassen, können mögliche Dienstleister, das heißt die potentiellen Anbieter 24a, 24b, auf der Fahrroute 22a, 22b mit Hintergrundinformationen, wie sie oben aufgelistet wurden, das heißt mit den Anbieterinformationsdaten 25a, 25b, aufgezeigt werden. Letzte Bestellungen mit gegebenenfalls. vorhandenen eigenen Bewertungen der möglichen potentiellen Anbieter 24a, 24b werden gegebenenfalls zuerst aufgezeigt. Gegebenenfalls können vom Insasse auch Priorisierungen für obige Punkte im Vorfeld angegeben werden und dementsprechend eine Priorisierung in der Vorschlagliste für potentielle Anbieter 24a, 24b erfolgen. Wird eine Bestellung über die mit dem fahrzeuginternen Navigationssystem gekoppelte Anzeigeeinrichtung 14 von einem Insassen ausgelöst, so kann ein Zwischenziel in Abhängigkeit von der Erreichbarkeit durch einen potentiellen Anbieter 24a, 24b und der eigenen Fahrroute 22a, 22b dynamisch erzeugt werden, um bei einem Zwischenhalt die Übergabe des Bestellobjekts 28a, 28b, das heißt des Essens, für den Insassen zu erreichen. Die Übergabe des bestellten Essens erfolgt an einem dynamisch anpassbaren Ort, der entsprechend der Verkehrslage für den Insassen und für das Übergabesystem 26 dynamisch angepasst werden kann. Die Übergabe der entsprechenden Dienstleistung oder des Produktes, das heißt des Bestellobjekts 28a, 28b, erfolgt somit gegebenenfalls an einem Parkplatz 52 an einer Schnellstraße und kann gegebenenfalls auch durch eine Drohne oder eine Kombination aus Lieferfahrzeug (gegebenenfalls auch autonom fahrend) mit Drohne angeliefert werden. Das gegebenenfalls autonom fahrende Kraftfahrzeug 10 des Insassen fährt gegebenenfalls vollautomatisch (entsprechend dynamischer Anpassung des Übergabeortes) an einer Raststätte an der Schnellstraße von der Schnellstraße ab und erwartet dort die Lieferung des Bestellobjekts 28a, 28b, also das frisch zubereitete Essen.

Es ist zudem zu erreichen, dass zwei Parteien (Insasse und Anbieter 24a, 24b in Form des mobilen Übergabesystems 26) an einen gemeinsamen Ort zusammengeführt werden, und zwar an den ermittelten Koordinaten 30a, 30b des Treffens. Mit der Bestellung eines Essen können gegebenenfalls auch verallgemeinert andere Dienstleistungen oder bestellt Produkte gemeint sein. Eine weitere Idee ist es, dass, wenn mit dem Navigationssystem in einem Kraftfahrzeug 10 nur die Adresse eines Restaurants als Fahrziel 20 angegeben wird, oder in einem gewissen Umkreis des Fahrziels 20 eine Filiale einer Restaurantkette liegt oder gezielt nach einer Filiale der Restaurantkette gesucht wurde und diese dann angefahren werden soll, bereits aus dem Kraftfahrzeug 10 eine vereinfachte und komfortable Bestellung ausgelöst werden kann. Wenn der Insasse eine Bestellung ausführen will, werden ihm dann Vorschläge für in der Vergangenheit von ihm ausgelöste übliche Bestellungen des Insassen bei einer Filiale der Restaurantkette aufgezeigt, aus denen er eine Auswahl treffen kann. Die Priorisierung der Auflistung vergangener Bestellungen kann dann gegebenenfalls voreingestellt werden: Je öfter eine Bestellung für ein bestimmtes Bestellobjekt 28a, 28b ausgeführt wurde, umso höher priorisiert ist dieses Bestellobjekt 28a, 28b in der Auflistung. Es kann jedoch auch eine Auflistung entsprechend der Historie ausgeführt werden, die typischerweise die letzten fünf Bestellungen umfasst, unter denen der Insasse eine Auswahl treffen und eine Bestellung bereits aus dem Kraftfahrzeug 10 ausführen kann. Diese Auflistung ist dann vergleichbar zu einer Zielsuche im Navigationssystem mit dem Aufruf "Letzte Ziele" nun jedoch mit einer Auflistung "Letzte Bestellungen" und/oder "Letzte Bestellungen bei der Restaurantkette X". Mittels einer aktivierbaren Auswahl kann eine Bestellung gelöst werden, das heißt mittels der Bestelloption 32a, 32b. Die Vorsortierung bei den letzten Bestellungen kann darüber hinaus verbunden werden mit einer Personenidentifizierung in der Fahrzeugkabine: So kann erkannt werden, wer der Fahrer beziehungsweise der Auslöser der Bestellung ist, und es kann sogar entsprechend der erkannten Anzahl der Personen mit gegebenenfalls jeweiligen Personen-Indentifizierungen sogar dementsprechend unter den "Letzten Bestellungen" jeweils eine Auswahl für jede Person angezeigt werden. Die jeweiligen Einzelbestellungen können natürlich jeweils noch bei Bedarf angepasst werden, indem eine Änderung der gewünschten Getränke oder ähnliches erfolgt.

Von Vorteil wäre es außerdem, dass zusammen mit einer Bestellung des Essens auch die Mitteilung an den Anbieter 24a, 24b versendet wird, wann voraussichtlich das Fahrziel 20 erreicht wird und das Essen frisch zubereitet bereitgestellt werden soll. Alternativ soll die Bestellung erst versandt werden, wenn ein bestimmter Entfernungsumkreis des Insassen erreicht wurde oder die voraussichtliche Fahrzeit ein vorgegebenes Limit unterschreitet. Gegebenenfalls kann auch dynamisch immer wieder nach vorgegebenen Zeitabschnitten eine angepasste voraussichtliche Ankunftszeit übermittelt werden. Die vorgeschlagenen Menüs unter "Letzte Bestellungen" bei dem Bestellvorgang können auch von Uhrzeit, Wochentag oder Jahreszeit abhängig gemacht werden. So können Vormittags Frühstück-Menüs und Nachmittags Vorschläge für Kaffee und Kuchen und/oder Snacks vorgeschlagen werden.

Die Bestellung eines Essens kann zudem dynamisch in Abhängigkeit von Fahraktionen ausgeführt werden beziehungsweise dynamisch eine Abfrage zu einer möglichen Bestellung erfolgen, wenn ein Zwischenziel dynamisch neu generiert wurde. Folgendes Szenario kann dementsprechend umgesetzt werden: Der Fahrer veranlasst das Verlassen der Fahrroute 22a, 22b auf der Schnellstraße über eine Ausfahrt. Er hat vorher im Navigationssystem hinterlegt, dass er nach dieser Fahraktion (Verlassen der Schnellstraße an einer Abfahrt mit Abweichung zur vorgeschlagenen Fahrroute 22a, 22b des Navigationssystems) eine Essensbestellung abgeben will, was dann automatisch oder nach Abfrage als neues Zwischenziel generiert werden soll und nicht permanent das Navigationssystem das Kraftfahrzeug 10 wieder auf die Schnellstraße zurückführen will. Es wird gegebenenfalls überprüft, ob sich ein potentieller Anbieter 24a, 24b in der Nähe befindet. Für die Suche kann ein bestimmter Umkreis, wie maximal zehn Kilometer Entfernung und/oder maximal zehn Minuten Fahrzeit, vorgegeben sein. Findet das Navigationssystem einen entsprechenden potentiellen Anbieter 24a, 24b, so wird diese - gegebenenfalls entsprechend einer Bestätigung nach einer Abfrage - angefahren. Damit verbunden kann im Vorfeld (vor der Ankunft bei dem Anbieter 24a, 24b), wie oben beschrieben, gleich die Abfrage nach einer Bestellung erfolgen. Generell macht es Sinn, dass Fahrzeuginsassen-Bestellungen während der Fahrt frühzeitig auslösen können, jedoch die Übermittlung an den Anbieter 24a, 24b und gegebenenfalls auch die Bezahlung erst dann erfolgt, wenn die Ankunftszeit genauer bekannt ist, das heißt der ermittelte Zeitpunkt 31a, 31b mit hoher Realisierungswahrscheinlichkeit feststeht oder nur weniger als zehn Minuten in der Zukunft liegt, um zu vermeiden, dass sich die Fahrroute 22a, 22b wegen eines Staus ändert und daher ein anderer Anbieter 24a, 24b angefahren werden muss. Die Auslösung der Bestellung und die damit gegebenenfalls verbundene Bezahlung kann gegebenenfalls noch mal abgefragt werden. Das Essen kann außerdem dem mobilen Übergabesystem 26 an die ermittelten Koordinaten 30a, 30b oder an das Fahrziel 20 geliefert werden, während der Insasse immer noch auf dem Weg zu den Koordinaten 30a, 30b oder dem Fahrziel 20 ist. Hierbei wird dynamisch die voraussichtliche Ankunftszeit an den Dienstleister gesandt, um rechtzeitig das Essen anliefern lassen zu können. Verspätungen durch Staus werden somit automatisch berücksichtigt. Der Insasse kann nach der Eingabe des Fahrziels 20 im Navigationssystem eine Auswahloption "Bestellung Essen zum Zielort" aktivieren und dann gegebenenfalls wieder letzte Bestellungen zu diesem Zielort als Fahrziel 20 zugehörig auflisten lassen, dann gegebenenfalls zuerst eine Liste von Anbietern 24a, 24b von vorangehenden Bestellungen anzeigen lassen und dann aus der Liste einen Anbieter 24a, 24b auswählen und bei diesem dann so vorgehen wie oben beschrieben, das heißt aus einer Auflistung vorangehender Bestellungen bei diesem Anbieter 24a, 24b eine Auswahl treffen.

Natürlich besteht für den Insassen stets die Möglichkeit nach neuen potentiellen Anbietern 24a, 24b suchen zu lassen, die in der Umgebung der Fahrroute 22a, 22b zeitgerecht das Kraftfahrzeug 10 beliefern können. Wenn noch keinen Anbieter 24a, 24b in der Vergangenheit beauftragt hat, kann zunächst nach potentiellen Anbietern 24a, 24b suchen lassen, die in der Vergangenheit den Insasse bereits entlang anderer Fahrrouten 22a, 22b in einem jeweiligen bestimmten Umkreisradius beliefert haben und die auch an entlang der aktuellen Fahrroute 22a, 22b zeitgerecht liefern können. Werden keine potentiellen Anbieter 24a, 24b gefunden, so kann mit gegebenenfalls bekannten Vorlieben des Insassen eine Zusammenstellung von möglichen potentiellen Anbietern 24a, 24b aufgelistet werden, die entlang der aktuellen Fahrroute 22a, 22b zeitgerecht beliefern können. Beim Auslösen der Bestellung aus einem Kraftfahrzeug 10 mit einem festen Fahrziel 20 kann der Insasse auch vorgeben, dass die Lieferung zur Ankunftszeit oder erst mit einer zeitlich zugehörigen Verzögerung oder zu einer vorgegebenen Uhrzeit stattfinden soll.

### Bezugszeichenliste

- 10: Kraftfahrzeug
- 11: Straße
- 12: Steuereinrichtung
- 14: Anzeigeeinrichtung
- 16: Kommunikationsschnittstelle
- 17: Bestellfunktion
- 18: aktuelle Position
- 19: Kommunikationsverbindung
- 20: Fahrziel
- 22a,b: Fahrroute
- 24a,b: Anbieter
- 25a,b: Anbieterinformationsdaten
- 26: mobiles Übergabesystem
- 27: Smartphone
- 28a,b: Bestellobjekt
- 29a,b: Umgebung
- 30a,b: ermittelte Koordinaten
- 30c: alternative Koordinaten
- 31a,b: ermittelter Zeitpunkt
- 31c: alternativer Zeitpunkt
- 32a,b: Bestelloption
- 33: externe Einrichtung
- 34: Bestelldaten
- 35: Lieferroute
- 36: Lieferzeit
- 37: Insassenprofil
- 38: Anfragesignal
- 39: Antwortsignal
- 40: Realisierungskriterium
- 42a, b: Bestellbestätigungsoption
- 50: Parkbucht
- 52: Parkplatz
- 54: Stellplatz
- 57a,b: maximaler Zeitpunkt

## Patentansprüche

1. Verfahren zum Liefern eines Bestellobjekts (28a, 28b) an ein zumindest teilautonom fahrendes Kraftfahrzeug (10), umfassend folgende Schritte:
- Überprüfen, ob im Kraftfahrzeug (10) eine Bestellfunktion (17) aktiviert wurde (S1);
- Feststellen einer aktuellen Position (18) sowie eines Fahrziels (20) des Kraftfahrzeugs (10) (S2);
- Ermitteln zumindest einer Fahrroute (22a, 22b) von der festgestellten aktuellen Position (18) zum festgestellten Fahrziel (20) unter Anwendung eines Fahrroutenoptimierungskriteriums (S3);
- falls die Bestellfunktion (17) aktiviert wurde, Ermitteln von Anbieterinformationsdaten (25a, 25b) von potentiellen Anbietern (24a, 24b), die eine Lieferung des Bestellobjekts (28a, 28b) mittels eines mobilen Übergabesystems (26) in einer vorgegebenen Umgebung (29a, 29b) der zumindest einen ermittelten Fahrroute (22a, 22b) anbieten (S4), wobei das mobile Übergabesystem (26) ein vollautonom fahrendes Kraftfahrzeug (10) eines Lieferservices oder eine autonom fahrende Lieferdrohne ist;
- für jeden der potentiellen Anbieter (24a, 24b), von dem jeweilige Anbieterinformationsdaten (25a, 25b) ermittelt wurden:
• Ermitteln von Koordinaten (30a, 30b) und einem Zeitpunkt (31a, 31b) eines Treffens des Kraftfahrzeugs (10) mit dem mobilen Übergabesystem (26) zum Liefern des Bestellobjekts (28a, 28b) vom mobilen Übergabesystem (26) an das Kraftfahrzeug (10) unter Anwendung eines eine aktuelle Verkehrslage beschreibenden Verkehrslagekriteriums sowie eines Planungskriteriums (S5);
• Anzeigen der ermittelten Anbieterinformationsdaten (25a, 25b) sowie der ermittelten Koordinaten (30a, 30b) und des ermittelten Zeitpunkts (31a, 31b) des Treffens auf einer Anzeigeeinrichtung (14) im Kraftfahrzeug (10) (S6);
• Bereitstellen einer aktivierbaren Bestelloption (32a, 32b) zum Bestellen des Lieferns des Bestellobjekts (28a, 28b) bei dem potentiellen Anbieter (24a, 24b) (S7);
- falls die Bestelloption (32a, 32b) von einem der potentiellen Anbieter (24a, 24b) aktiviert wurde, zumindest teilautonomes Ansteuern des Kraftfahrzeugs (10) zum für das Liefern des Bestellobjekts (28a, 28b) von diesem potentiellen Anbieter (24a, 24b) ermittelten Treffen mit dem mobilen Übergabesystem (26) (S8);
- Übermitteln von Bestelldaten (34), die die Bestellung der Lieferung des Bestellobjekts (28a, 28b) beschreiben, sowie der ermittelten Koordinaten (30a, 30b) und des ermittelten Zeitpunkts (31a, 31b) des Treffens des Kraftfahrzeugs (10) mit dem mobilen Übergabesystem (26) an eine externe Einrichtung (33) (S9);
- Ermitteln einer Lieferroute (35) und einer Lieferzeit (36) für das mobile Übergabesystem (26) zum ermittelten Treffen mittels der externen Einrichtung unter Anwendung eines Lieferplanungskriteriums (S10); und
- Übermitteln der ermittelten Lieferroute (35) und der ermittelten Lieferzeit (36) an das mobile Übergabesystem (26) (S11).

2. Verfahren nach dem vorhergehenden Anspruch, wobei, falls Anbieterinformationsdaten (25a, 25b) von mehreren potentiellen Anbieter (24a, 24b) ermittelt wurden, unter Anwendung eines Bestellverhaltenskriteriums auf die ermittelten Anbieterinformationsdaten (25a, 25b) eine jeweilige Bestellwahrscheinlichkeit ermittelt wird, die eine Wahrscheinlichkeit beziffert, mit der ein Insasse des Kraftfahrzeugs (10) bei dem jeweiligen ermittelten potentiellen Anbieter (24a, 24b) das Bestellobjekt (28a, 28b) bestellt, und die ermittelten Bestellwahrscheinlichkeiten zum Bereitstellen der jeweiligen aktivierbaren Bestelloption (32a, 32b) für das Bestellobjekt (28a, 28b) ausgewertet wird.

3. Verfahren nach dem vorhergehenden Anspruch, wobei das Bestellverhaltenskriterium zumindest eine von folgenden Angaben umfasst:
- eine maximale Zeitdauer bis zur Lieferung des Bestellobjekts (28a, 28b);
- einen maximalen Preis des Bestellobjekts (28a, 28b);
- eine maximale Zeitverzögerung einer Ankunft am Fahrziel (20) durch Ansteuern der ermittelten Koordinaten (30a, 30b) des Treffens;
- eine minimale durchschnittliche Kundenbewertung des potentiellen Anbieters (24a, 24b);
- hinterlegte Bestellverhaltensdaten des Insassen.

4. Verfahren nach einem der vorhergehenden Ansprüche, wobei eine Bestellwunschwahrscheinlichkeit eines Insassen des Kraftfahrzeugs (10) unter Anwendung eines Bestellwunschkriteriums ermittelt, und, falls die ermittelte Bestellwunschwahrscheinlichkeit größer als eine vorgegebene minimale Grenzwahrscheinlichkeit ist, die Bestellfunktion (17) zur Aktivierung im Kraftfahrzeug (10) bereitgestellt wird.

5. Verfahren nach einem der Ansprüche 2 bis 4, wobei das Bestellverhaltenskriterium, die Bestellverhaltensdaten und/oder das Bestellwunschkriterium in einem mit dem Insassen des Kraftfahrzeugs (10) verknüpften Insassenprofil (37) hinterlegt sind, das zum Bereitstellen der Bestelloption (32a, 32b) und/oder der Bestellfunktion (17) bereitgestellt wird.

6. Verfahren nach einem der vorhergehenden Ansprüche, wobei, falls festgestellt wird, dass eine vorgegebene Fahraktion vom Kraftfahrzeug (10) durchgeführt wurde, die Bestellfunktion (17) im Kraftfahrzeug (10) aktiviert und/oder die Bestellfunktion (17) zur Aktivierung bereitgestellt wird.

7. Verfahren nach einem der vorhergehenden Ansprüche, wobei an den zumindest einen potentiellen Anbieter (24a, 24b), zu dem Anbieterinformationsdaten (25a, 25b) ermittelt wurden, ein Anfragesignal (38) ausgesendet wird, mittels dessen angefragt wird, ob die Lieferung des Bestellobjekts (28a, 28b) zu den ermittelten Koordinaten (30a, 30b) und zum ermittelten Zeitpunkt (31a, 31b) des Treffens von dem zumindest einen potentiellen Anbieter (24a, 24b) angeboten wird, und nur falls ein Antwortsignal (39) empfangen wird, gemäß dem die Anfrage bestätigt wird, die aktivierbare Bestelloption (32a, 32b) für den Anbieter (24a, 24b) bereitgestellt wird.

8. Verfahren nach einem der vorhergehenden Ansprüche, wobei die Anbieterinformationsdaten (25a, 25b) aktuelle Bestellzeitdaten umfassen, die unter Anwendung des Verkehrslagekriteriums sowie des Planungskriteriums kontinuierlich erzeugt werden und die angeben, bis zu welchem maximalen Zeitpunkt (57a, 57b) die Bestelloption (32a, 32b) aktivierbar ist, um die Lieferung des Bestellobjekt (28a, 28b) zu den ermittelten Koordinaten (30a, 30b) und zum ermittelten Zeitpunkt (31a, 31b) des Treffens zu bestellen.

9. Verfahren nach einem der vorhergehenden Ansprüche, wobei, nachdem die Bestelloption (32a, 32b) aktiviert wurde, unter Anwendung eines Realisierungskriteriums (40) kontinuierlich überprüft wird, ob die Lieferung des Bestellobjekt (28a, 28b) zu den ermittelten Koordinaten (30a, 30b) und zum ermittelten Zeitpunkt (31a, 31b) des Treffens weiterhin realisierbar ist, wobei, falls festgestellt wird, dass die Lieferung des Bestellobjekt (28a, 28b) zu den ermittelten Koordinaten (30a, 30b) und zum ermittelten Zeitpunkt (31a, 31b) des Treffens unrealisierbar ist, unter Anwendung des Verkehrslagekriteriums sowie des Planungskriteriums alternative Koordinaten (30c) und/oder ein alternativer Zeitpunkt (31c) eines alternativen Treffens ermittelt werden und das Kraftfahrzeug (10) zumindest teilautonom zum alternativen Treffen angesteuert wird.

10. Verfahren nach einem der vorhergehenden Ansprüche, wobei, sobald die Bestelloption (32a, 32b) aktiviert wurde, eine verbindliche Bestellung der Lieferung des Bestellobjekts (28a, 28b) an den entsprechenden Anbieter (24a, 24b) übermittelt wird.

11. Verfahren nach einem der Ansprüche 1 bis 9, wobei, sobald die Bestelloption (32a, 32b) aktiviert wurde, eine aktivierbare Bestellbestätigungsoption (42a, 42b) im Kraftfahrzeug (10) angezeigt und erst nach dem Aktivieren der Bestellbestätigungsoption (42a, 42b) eine verbindliche Bestellung der Lieferung des Bestellobjekts (28a, 28b) an den entsprechenden Anbieter (24a, 24b) übermittelt wird.

12. Kraftfahrzeug (10) mit einer Steuereinrichtung (12), die dazu ausgebildet ist, ein Verfahren nach einem der vorhergehenden Ansprüche durchzuführen.

## Claims

1. Method for supplying an ordered object (28a, 28b) to an at least partly autonomous motor vehicle (10), comprising the following steps:
- checking whether an ordering function (17) has been activated in the motor vehicle (10) (S1);
- establishing a current position (18) and a destination (20) of the motor vehicle (10) (S2);
- determining at least one route (22a, 22b) from the established current position (18) to the established destination (20) by using a route optimization criterion (S3) ;
- if the ordering function (17) has been activated, determining provider information data (25a, 25b) from potential providers (24a, 24b) that offer delivery of the ordered object (28a, 28b) by means of a mobile transfer system (26) in a predefined area (29a, 29b) around the at least one determined route (22a, 22b) (S4), the mobile transfer system (26) being a fully autonomous motor vehicle (10) of a delivery service or an autonomous delivery drone;
- for each of the potential providers (24a, 24b) from whom respective provider information data (25a, 25b) has been determined:
• determining coordinates (30a, 30b) and a time (31a, 31b) at which the motor vehicle (10) will meet the mobile transfer system (26) for delivering the ordered object (28a, 28b) from the mobile transfer system (26) to the motor vehicle (10), by using a current traffic situation criterion describing a current traffic situation and also a planning criterion (S5);
• displaying the determined provider information data (25a, 25b) and the determined coordinates (30a, 30b) and the determined time (31a, 31b) of the meeting on a display device (14) in the motor vehicle (10) (S6) ;
• providing an ordering option (32a, 32b) that can be activated for ordering the delivery of the ordered object (28a, 28b) at the potential provider (24a, 24b) (S7);
- if the ordering option (32a, 32b) from one of the potential providers (24a, 24b) has been activated, at least partly autonomously driving the motor vehicle (10) to the meeting with the mobile transfer system (26) determined for the delivery of the ordered object (28a, 28b) from this potential provider (24a, 24b) (S8) ;
- transmitting order data (34) which describes the order for the delivery of the ordered object (28a, 28b) and the determined coordinates (30a, 30b) and the determined time (31a, 31b) of the meeting of the vehicle (10) with the mobile transfer system (26) to an external device (33) (S9);
- determining a delivery route (35) and a delivery time (36) for the mobile transfer system (26) to the determined meeting by means of the external device, using a delivery planning criterion (S10); and
- transmitting the determined delivery route (35) and the determined delivery time (36) to the mobile transfer system (26) (S11).

2. Method according to the preceding claim, wherein, if provider information data (25a, 25b) from a plurality of potential providers (24a, 24b) has been determined, by applying an order response criterion to the determined provider information data (25a, 25b), a respective order probability is determined, which quantifies a probability with which an occupant of the motor vehicle (10) will order the ordered object (28a, 28b) from the respective determined potential provider (24a, 24b), and the determined order probabilities relating to providing the respective ordering option (32a, 32b) that can be activated for the ordered object (28a, 28b) are evaluated.

3. Method according to the preceding claim, wherein the order response criterion comprises at least one of the following items of information:
- a maximum time period until the delivery of the ordered object (28a, 28b);
- a maximum price of the ordered object (28a, 28b);
- a maximum time delay of an arrival at the destination (20) as a result of driving to the determined coordinates (30a, 30b) of the meeting;
- a minimum average customer assessment of the potential provider (24a, 24b);
- stored order response data relating to the occupant.

4. Method according to one of the preceding claims, wherein an order request probability of an occupant of the motor vehicle (10) is determined by applying an order request criterion and, if the determined order request probability is greater than a predefined minimum limiting probability, the ordering function (17) is provided for activation in the motor vehicle (10) .

5. Method according to one of Claims 2 to 4, wherein the order response criterion, the order response data and/or the order request criterion are stored in an occupant profile (37) linked to the occupant of the motor vehicle (10), which profile is provided for the provision of the ordering option (32a, 32b) and/or the ordering function (17).

6. Method according to one of the preceding claims, wherein, if it is established that a predefined driving action has been carried out by the motor vehicle (10), the ordering function (17) in the motor vehicle (10) is activated and/or the ordering function (17) is provided for activation.

7. Method according to one of the preceding claims, wherein a query signal (38) is transmitted to the at least one potential provider (24a, 24b) to whom provider information data (25a, 25b) has been determined, by means of which a query is raised as to whether the delivery of the ordered object (28a, 28b) to the determined coordinates (30a, 30b) and at the determined time (31a, 31b) of the meeting is offered by the at least one potential provider (24a, 24b) and only if a response signal (39) is received according to which the query is confirmed, the ordering option (32a, 32b) that can be activated for the provider (24a, 24b) is provided.

8. Method according to one of the preceding claims, wherein the provider information data (25a, 25b) comprises current ordering time data, which is produced continuously by applying the traffic situation criterion and the planning criterion and which indicates the maximum time (57a, 57b) up to which the ordering option (32a, 32b) can be activated in order to order the delivery of the ordered object (28a, 28b) to the determined coordinates (30a, 30b) and at the determined time (31a, 31b) of the meeting.

9. Method according to one of the preceding claims, wherein, after the ordering option (32a, 32b) has been activated, a check is made continuously by applying an implementation criterion (40) as to whether the delivery of the ordered object (28a, 28b) to the determined coordinates (30a, 30b) and at the determined time (31a, 31b) of the meeting can continue to be implemented, wherein, if it is established that the delivery of the ordered object (28a, 28b) to the determined coordinates (30a, 30b) and at the determined time (31a, 31b) of the meeting cannot be implemented, alternative coordinates (30c) and/or an alternative time (31c) of an alternative meeting are determined by applying the traffic situation criterion and the planning criterion, and the motor vehicle (10) is driven at least partly autonomously to the alternative meeting.

10. Method according to one of the preceding claims, wherein, as soon as the ordering option (32a, 32b) has been activated, a binding order for the delivery of the ordered object (28a, 28b) is transmitted to the corresponding provider (24a, 24b).

11. Method according to one of Claims 1 to 9, wherein, as soon the ordering option (32a, 32b) has been activated, an order confirmation option (42a, 42b) that can be activated is displayed in the motor vehicle (10), and only following the activation of the order confirmation option (42a, 42b) is a binding order for the delivery of the ordered object (28a, 28b) transmitted to the corresponding provider (24a, 24b).

12. Motor vehicle (10) having a control device (12) which is designed to carry out a method according to one of the preceding claims.

## Revendications

1. Procédé de livraison d'un objet commandé (28a, 28b) à un véhicule automobile (10) au moins partiellement autonome, ledit procédé comprenant les étapes suivantes :
- vérifier si une fonction de commande (17) a été activée (S1) dans le véhicule automobile (10) ;
- définir une position actuelle (18) et une destination (20) du véhicule automobile (10) (S2) ;
- déterminer au moins un itinéraire (22a, 22b) depuis la position actuelle définie (18) jusqu'à la destination définie (20) à l'aide d'un critère d'optimisation d'itinéraire (S3) ;
- si la fonction de commande (17) a été activée, déterminer des données d'informations de fournisseur (25a, 25b) à partir de fournisseurs potentiels (24a, 24b) qui fournissent une livraison de l'objet commandé (28a, 28b) au moyen d'un système de livraison mobile (26) dans un environnement spécifié (29a, 29b) de l'au moins un itinéraire déterminé (22a, 22b) (S4), le système de livraison mobile (26) étant un véhicule automobile entièrement autonome (10) d'un service de livraison ou un drone de livraison autonome ;
- pour chacun des fournisseurs potentiels (24a, 24b) dont des données d'informations de fournisseur respectives (25a, 25b) ont été déterminées :
• déterminer des coordonnées (30a, 30b) et un instant (31a, 31b) où le système de livraison mobile (26) rencontrera le véhicule automobile (10) pour livrer l'objet commandé (28a, 28b) du système de livraison mobile (26) au véhicule automobile (10) à l'aide d'un critère de situation de circulation décrivant une situation de circulation actuelle et d'un critère de planification (S5) ;
• afficher les données d'information de fournisseur déterminées (25a, 25b) ainsi que les coordonnées déterminées (30a, 30b) et l'instant déterminé (31a, 31b) de la rencontre sur un dispositif d'affichage (14) situé dans le véhicule automobile (10) (S6) ;
• fournir une option de commande activable (32a, 32b) pour commander la livraison de l'objet commandé (28a, 28b) auprès du fournisseur potentiel (24a, 24b) (S7) ;
- si l'option de commande (32a, 32b) a été activée par l'un des fournisseurs potentiels (24a, 24b), commander au moins de manière partiellement autonome le véhicule automobile (10) en vue de la rencontre avec le système de livraison mobile (26) qui a été déterminée par ce fournisseur potentiel (24a, 24b) pour livrer l'objet commandé (28a, 28b) (S8) ;
- transmettre à un dispositif externe (33) des données de commande (34) qui décrivent la commande de la livraison de l'objet commandé (28a, 28b), ainsi que les coordonnées déterminées (30a, 30b) et l'instant déterminé (31a, 31b) où le système de livraison mobile (26) rencontre le véhicule automobile (10) (S9) ;
- déterminer un itinéraire de livraison (35) et un instant de livraison (36) du système de livraison mobile (26) en vue de la rencontre déterminée au moyen du dispositif externe à l'aide d'un critère de planification de livraison (S10) ; et
- transmettre l'itinéraire de livraison déterminé (35) et l'instant de livraison déterminé (36) au système de livraison mobile (26) (S11) .

2. Procédé selon la revendication précédente, si des données d'informations de fournisseur (25a, 25b) ont été déterminées à partir de plusieurs fournisseurs potentiels (24a, 24b), une probabilité de commande respective étant déterminée à l'aide d'un critère de comportement de commande sur les données d'informations de fournisseur déterminées (25a, 25b), laquelle probabilité de commande quantifie une probabilité avec laquelle un passager du véhicule automobile (10) commande l'objet commandé (28a, 28b) auprès du fournisseur potentiel déterminé respectif (24a, 24b), et les probabilités de commande déterminées sont évaluées pour fournir l'option de commande activable respective (32a, 32b) pour l'objet commandé (28a, 28b).

3. Procédé selon la revendication précédente, le critère de comportement de commande comprenant au moins une des informations suivantes :
- un délai maximum jusqu'à la livraison de l'objet commandé (28a, 28b) ;
- un prix maximum de l'objet commandé (28a, 28b) ;
- un retard maximum d'une arrivée à la destination (20) par commande des coordonnées déterminées (30a, 30b) de la rencontre ;
- une évaluation client moyenne minimale du fournisseur potentiel (24a, 24b) ;
- des données de comportement de commande stockées de l'occupant.

4. Procédé selon l'une des revendications précédentes, une probabilité de souhait de commande d'un occupant du véhicule automobile (10) étant déterminée à l'aide d'un critère de souhait de commande et, si la probabilité de souhait de commande déterminée est supérieure à une probabilité limite minimale spécifiée, la fonction de commande (17) étant prévue pour être activée dans le véhicule automobile (10).

5. Procédé selon l'une des revendications 2 à 4, le critère de comportement de commande, les données de comportement de commande et/ou le critère de souhait de commande étant stockés dans un profil d'occupant (37) qui est lié à l'occupant du véhicule automobile (10) et qui est prévu pour fournir l'option de commande (32a, 32b) et/ou la fonction de commande (17).

6. Procédé selon l'une des revendications précédentes, s'il est déterminé qu'une action de conduite spécifiée a été effectuée par le véhicule automobile (10), la fonction de commande (17) dans le véhicule automobile (10) étant activée et/ou la fonction de commande (17) étant prévue pour être activée.

7. Procédé selon l'une des revendications précédentes, un signal de demande (38) étant envoyé à l'au moins un fournisseur potentiel (24a, 24b) pour lequel des données d'information de fournisseur (25a, 25b) ont été déterminées, et permettant de demander si la livraison de l'objet commandé (28a, 28b) est fournie par l'au moins un fournisseur potentiel (24a, 24b) aux coordonnées déterminées (30a, 30b) et à l'instant déterminé (31a, 31b) de la rencontre et l'option de commande activable (32a, 32b) pour le fournisseur (24a, 24b) étant prévue seulement si un signal de réponse (39) est reçu selon lequel la demande est confirmée.

8. Procédé selon l'une des revendications précédentes, les données d'informations de fournisseur (25a, 25b) comprenant des données de temps de commande actuelles qui sont générées en continu à l'aide du critère de situation de trafic et du critère de planification et qui indiquent l'instant maximum (57a, 57b) jusqu'auquel l'option de commande (32a, 32b) peut être activée pour effectuer la livraison de l'objet commandé (28a, 28b) aux coordonnées déterminées (30a, 30b) et à l'instant déterminée (31a, 31b) de la rencontre.

9. Procédé selon l'une des revendications précédentes, après l'activation de l'option de commande (32a, 32b), un critère de réalisation (40) étant utilisé pour vérifier en continu si la livraison de l'objet commandé (28a, 28b) aux coordonnées déterminées (30a, 30b) et l'instant déterminé (31a, 31b) de la rencontre est encore réalisable, s'il est déterminé que la livraison de l'objet commandé (28a, 28b) aux coordonnées déterminées (30a, 30b) et à l'instant déterminé (31a, 31b) de la rencontre est irréalisable, le critère de situation de trafic et le critère de planification étant utilisés pour déterminer des coordonnées alternatives (30c) et/ou un instant alternatif (31c) d'une rencontre alternative et pour commander le véhicule automobile (10) au moins de manière partiellement autonome jusqu'à la rencontre alternative.

10. Procédé selon l'une des revendications précédentes, dès que l'option de commande (32a, 32b) a été activée, une commande obligatoire de la livraison de l'objet commandé (28a, 28b) étant transmise au fournisseur correspondant (24a, 24b).

11. Procédé selon l'une des revendications 1 à 9, dès que l'option de commande (32a, 32b) a été activée, une option de confirmation de commande activable (42a, 42b) étant affichée dans le véhicule automobile (10) et une commande obligatoire de la livraison de l'objet commandé (28a, 28b) étant transmise au fournisseur correspondant (24a, 24b) seulement après l'activation de l'option de confirmation de commande (42a, 42b).

12. Véhicule automobile (10) comprenant un dispositif de commande (12) qui est conçu pour mettre en œuvre un procédé selon l'une des revendications précédentes.
